(19) Europäisches Patentamt / European Patent Office / Office européen des brevets

(11) **EP 3 457 612 B1**

(12) **EUROPEAN PATENT SPECIFICATION**

(45) Date of publication and mention
of the grant of the patent:
**13.07.2022  Bulletin 2022/28**

(21) Application number: **17802179.6**

(22) Date of filing: **24.05.2017**

(51) International Patent Classification (IPC):
**H04L 5/00** (2006.01)          H04L 5/14 (2006.01)

(52) Cooperative Patent Classification (CPC):
**H04L 5/0032; H04L 5/0048; H04L 5/0073;**
**H04L 5/0094;** H04L 5/0026; H04L 5/1469

(86) International application number:
**PCT/CN2017/085682**

(87) International publication number:
**WO 2017/202333 (30.11.2017 Gazette 2017/48)**

(54) **METHOD AND DEVICE FOR TRANSMITTING REFERENCE SIGNAL, NETWORK APPARATUS AND USER EQUIPMENT UNIT**

VERFAHREN UND VORRICHTUNG ZUR ÜBERTRAGUNG EINES REFERENZSIGNALS, NETZWERKVORRICHTUNG UND BENUTZERGERÄTEEINHEIT

PROCÉDÉ ET DISPOSITIF DESTINÉS À LA TRANSMISSION D'UN SIGNAL DE RÉFÉRENCE, APPAREIL DE RÉSEAU ET UNITÉ D'ÉQUIPEMENT D'UTILISATEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.05.2016  CN 201610352243**
**05.01.2017  CN 201710008515**

(43) Date of publication of application:
**20.03.2019  Bulletin 2019/12**

(73) Proprietor: **Huawei Technologies Co., Ltd.**
**Longgang District**
**Shenzhen, Guangdong 518129 (CN)**

(72) Inventors:
• **WANG, Ting**
**Shenzhen**
**Guangdong 518129 (CN)**
• **LI, Yuanjie**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2015/034402      WO-A1-2015/069026
CN-A- 102 823 167      CN-A- 103 875 219
US-A1- 2015 350 945

• **INTEL CORPORATION: "Discussion on inter-cell measurements for LTE-TDD eIMTA", 3GPP DRAFT; R1-131471 - INTEL - DISCUSSION ON ENB-ENB MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Chicago, USA; 20130415 - 20130419 6 April 2013 (2013-04-06), XP050697281, Retrieved from the Internet: URL:http://www.3gpp.org/ftp/tsg_ran/WG1_RL 1/TSGR1_72b/Docs/ [retrieved on 2013-04-06]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present invention relate to the field of wireless communications technologies, and in particular, to a reference signal transmission method and apparatus, a network device, and user equipment.

**BACKGROUND**

With globally wide application of third generation wireless communications technologies and arrival of a Long Term Evolution (Long Term Evolution, LTE) technology era, mobile network data transmission rate and total data volume requirements increase rapidly, imposing a higher requirement on spectrum resource utilization.

To improve spectrum resource utilization, an LTE frequency division duplex (Frequency Division Duplex, FDD) technology distinguishes between a transmit channel and a receive channel based on a frequency, and an LTE time division duplex (Time Division Duplex, TDD) technology distinguishes between a transmit channel and a receive channel based on a timeslot.

However, when a same working frequency range is configured for a plurality of LTE cells, when a first base station and a second base station that are adjacent or close to each other send and receive data, a downlink signal of the first base station may cause some interference to an uplink signal of the second base station. As a result, uplink data sent by user equipment served by the second base station has a high bit error rate.

US 2015/350945 A1 discloses a method by which a first base station measures a channel with a second base station in a wireless communication system, the channel measuring method comprising the steps of: receiving a reference signal transmitted by the second base station, in a first subframe; and estimating a channel with the second base station on the basis of the reference signal, wherein the first subframe is obtained by changing a subframe indicated for an uplink by system information into a subframe for a downlink by the second base station.

WO 2015/034402 A1 discloses network nodes and methods therein for inter cell interference coordination. A method in a base station BS1 comprises receiving, from a neighboring base station BS2, an indicator A, related to estimated spatial properties of a radio channel over which the neighboring base station has received a radio signal from the base station BS1. The method further comprises receiving, from a UE served by the base station, an indicator B related to estimated spatial properties of a radio channel over which the UE has received a radio signal from the base station BS1. The method further comprises determining a correlation based on indicator A and indicator B; and adapting a transmission to the UE, based on properties of the correlation. By performing the method, the base station BS enables control of interference subjected towards the neighboring base station BS2 caused by downlink transmission to the UE.

Intel Corporation: "Discussion on inter-cell measurements for LTE-TDD eIMTA" introduces inter-cell (eNodeB-eNodeB) measurements for DL-UL interference management.

**SUMMARY**

The present invention is defined by the independent claims. Specific embodiments are defined by the dependent claims.

Embodiments of the present invention provide a reference signal transmission method and apparatus, a network device, and user equipment, so as to resolve a prior-art problem of a high bit error rate of uplink data due to interference.

**BRIEF DESCRIPTION OF DRAWINGS**

FIG. 1 is a schematic flowchart of Embodiment 1 of a reference signal transmission method according to the present invention;

FIG. 2 is a schematic flowchart of an interaction process of an optional implementation of cancelling, by an NE2 based on a first RS, interference from an NE1 to first uplink data in S102 of the method shown in FIG. 1;

FIG. 3 is a flowchart of an optional implementation of obtaining, by an NE2, first configuration information in the method shown in FIG. 1;

FIG. 4 is a schematic flowchart of a first optional implementation of Embodiment 2 of a reference signal transmission method, said embodiment 2 not being according to the invention and being present for illustration purposes only;

FIG. 5 is a schematic flowchart of a second optional implementation of Embodiment 2 of a reference signal transmission method, said embodiment 2 not being according to the invention and being present for illustration purposes only;

FIG. 6 is a schematic flowchart of a first optional implementation of Embodiment 3 of a reference signal transmission method, said embodiment 3 not being according to the invention and being present for illustration purposes only.

FIG. 7 is a schematic flowchart of a second optional implementation of Embodiment 3 of a reference signal transmission method, said embodiment 3 not being according to the invention and being present for illustration purposes only;

FIG. 8 is a schematic diagram of a first optional implementation of first RE indication information of first configuration information;

FIG. 9 is a schematic diagram of a second optional implementation of first RE indication information of first configuration information;

FIG. 10 is a schematic diagram of a third optional implementation of first RE indication information of first configuration information;

FIG. 11 is a schematic diagram of a fourth optional implementation of first RE indication information of first configuration information;

FIG. 12 is a first-part schematic diagram of a fifth optional implementation of first RE indication information of first configuration information;

FIG. 13 is a second-part schematic diagram of a fifth optional implementation of first RE indication information of first configuration information;

FIG. 14 is a schematic diagram of a sixth optional implementation of first RE indication information of first configuration information;

FIG. 15 is a schematic diagram of a scenario of an optional implementation of first configuration information;

FIG. 16 is a schematic diagram of a scenario of another optional implementation of first configuration information;

FIG. 17 is a schematic structural diagram of a network device;

FIG. 18 is a schematic structural diagram of another network device;

FIG. 19 is a schematic structural diagram of user equipment;

FIG. 20 is an optional schematic structural diagram of a network device;

FIG. 21 is an optional schematic structural diagram of another network device; and

FIG. 22 is an optional schematic structural diagram of user equipment.

## DESCRIPTION OF EMBODIMENTS

In a communications system, spectrum resource utilization improvement achieved by various communications technologies results in an increasingly obvious interference problem. For example, in an LTE system, when a same frequency band is configured for neighboring cells, a downlink frequency band of one cell may overlap with an uplink frequency band of another cell, and as a result, a downlink signal of the former cell causes interference to an uplink signal of the latter cell. For another example, for a TDD-mode cell, although uplink and downlink data channels may be separated by different timeslots by using a subframe ratio, when a cell uplink-downlink subframe configuration of a cell is different from that of a neighboring cell, a signal transmitted in a downlink timeslot of the cell still causes interference to a signal transmitted in an uplink timeslot of the neighboring cell. For another example, a dynamic TDD technology that is more advanced than a normal TDD technology can be used to flexibly and quickly change a timeslot configuration of a cell based on a cell uplink and downlink service load status of a network, and improve a cell uplink and downlink service throughput by matching a specific service requirement of the cell. However, while the dynamic TDD technology is introduced, uplink and downlink interference between different cells is inevitably caused. As a result, an inter-cell interference (Inter-cell Interference) problem becomes more serious. An advantage of flexible and highly efficient performance of the TDD technology can be maximized only when the problem is effectively resolved.

For interference scenarios with the foregoing various networking configurations, the embodiments of the present invention provide a reference signal transmission method to cancel interference, thereby improving data reception accuracy.

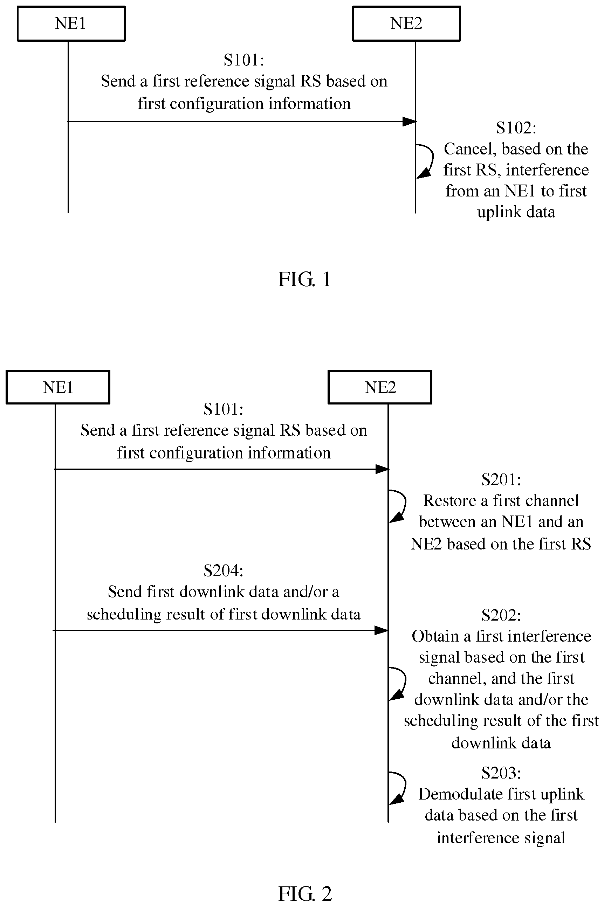

FIG. 1 is a schematic flowchart of Embodiment 1 of a reference signal transmission method according to the present invention.

An execution body of this embodiment of the present invention may include a first network device NE1 and a second network device NE2. In this embodiment of the present invention, a network device includes a radio interface for communication with user equipment, so that the user equipment performs wireless communication by using the network device. The network device may be a base transceiver station (Base Transceiver Station, BTS) in a GSM system or a CDMA system, may be a NodeB (NodeB, NB) in a WCDMA system, may be an evolved NodeB (Evolved NodeB, eNB or eNodeB) in an LTE system, or may be a wireless controller in a cloud radio access network (Cloud Radio Access Network, CRAN). Alternatively, the network device may be a relay station, an access point, an in-vehicle device, a wearable device, a network-side device in a future 5G network, a network device in a future evolved public land mobile network (Public Land Mobile Network, PLMN), or the like.

As shown in FIG. 1, the method in this embodiment of the present invention may include the following steps.

S101: The NE1 sends a first reference signal RS to the NE2 based on first configuration information.

In the embodiments of the present invention, the NE1 and the NE2 may be network devices in a base-station-type homogeneous network, or may be network devices in a heterogeneous network. For example, the NE1 and the NE2 may both be micro base stations, may both be macro base stations, or may be a micro base station and a macro base station, respectively. Optionally, the NE1 and the NE2 may be a same base station or different base stations.

The first configuration information includes information used to indicate a time-frequency resource used by the NE1 for sending the first RS to the NE2. The time-frequency resource may include at least one of a time domain resource, a frequency domain resource, or a space domain resource. For example, if the NE1 and the NE2 are base stations in LTE, the time-frequency resource indicated by the first configuration information may be subframe information of the first RS, and/or first RE indication information used to indicate an RE occupied by the first RS. Optionally, the first configuration information may further include a scrambling code. The scrambling code may be used by the NE1 to scramble the first RS for sending. Optionally, the scrambling code may be an identifier of the NE1.

Optionally, the NE1 may send the first RS to an antenna port of a second cell CELL2 of the NE2 by using an antenna port of a first cell CELL1.

It should be noted that the CELL1 of the NE1 and the CELL2 of the NE2 may belong to a same coordination set. Subframes of all network devices in one coordination set are synchronized. For example, subframes may be regularly aligned, so that subframes with a same subframe number in all the network devices have a same start location.

It should be noted that the NE1 may send the first RS to the NE2 by using an antenna of the NE1, and the NE2 receives the first RS by using an antenna device of the NE2. To be specific, the first RS passes through a first channel between the NE1 and the NE2. Channels in a TDD system have channel reciprocity. Therefore, a channel for sending from the NE2 to the NE1 may be estimated based on a channel for sending from the NE1 to the NE2. Therefore, the first channel between the NE1 and the NE2 may be estimated based on the first RS.

Optionally, the NE1 may send the first RS to the antenna port of the second cell CELL2 of the NE2 by using the antenna port of the first cell CELL1. In this case, interference cancelled by the NE2 by using the first RS is interference caused by a downlink channel of the CELL1 to an uplink channel of the CELL2.

S102: The NE2 cancels, based on the first RS, interference from the NE1 to first uplink data.

The first uplink data is from user equipment served by the NE2.

It should be noted that, in this embodiment of the present invention, user equipment may be various types of terminal devices, and the terminal device may be mobile or fixed. The terminal device may be an access terminal, user equipment (User Equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, a terminal device in a future 5G network, a terminal device in a future evolved PLMN, or the like.

FIG. 2 is a schematic flowchart of an interaction process of an optional implementation of the cancelling, by the NE2 based on the first RS, interference from the NE1 to first uplink data in S102 of the method shown in FIG. 1.

Referring to FIG. 2, on a basis of the transmission method shown in FIG. 1, S102 in the transmission method provided in this embodiment of the present invention may include S201 to S203.

S201: The NE2 restores the first channel between the NE1 and the NE2 based on the first RS.

S202: The NE2 obtains a first interference signal based on the first channel and at least one of first downlink data and a scheduling result of the first downlink data.

The first downlink data and/or the scheduling result of the first downlink data may be sent by the NE1 to the NE2 before S202, or may be predefined downlink data and a predefined scheduling result of the downlink data. The first interference signal includes an interference signal of downlink data of the NE1 to the first uplink data.

S203: The NE2 demodulates the first uplink data based on the first interference signal.

When demodulating the first uplink data, the NE2 may remove an interference signal from a signal stream of the received first uplink data by using the first interference signal, thereby improving accuracy of demodulating the first uplink data by the NE2.

Optionally, before S202, the method may include:

S204: The NE1 sends the first downlink data and/or the scheduling result of the first downlink data to the NE2.

The first downlink data is sent by the NE1 to user equipment served by the NE1. The NE1 may send the first downlink data and/or the scheduling result of the first downlink data to the NE2 by using an X2 interface, a network management interface, or another wired data channel. Optionally, the NE1 may alternatively send the first downlink data and/or the scheduling result of the first downlink data by using a wireless data channel. Optionally, the NE1 and the NE2 may be a same network device, and in this case, the NE2 may obtain the first downlink data and the scheduling result of the first downlink data by using a data channel between internal modules. In this case, a person skilled in the art should be aware that S201 is not a step that needs to be performed.

It should be noted that S201 to S203 are an optional manner of cancelling, by the NE2, the interference from the NE1 to the first uplink data. Another optional manner is described in the following.

It should be further noted that, for a TDD-mode cell, if two neighboring or co-coverage cells have a same frequency range but different cell uplink-downlink subframe configurations, for example, a downlink timeslot of the CELL1 happens to be an uplink timeslot of the CELL2, interference to a signal in the uplink timeslot of the CELL2 is caused when there is downlink data in the downlink timeslot of the CELL1. If uplink-downlink subframe configurations of neighboring cells are limited, the following case may be caused for cells with different load: Resources in a transmission direction are wasted while resources in another transmission direction are insufficient. Therefore, such interference caused by inconsistency between uplink-downlink subframe configurations usually cannot be resolved by coordinating uplink-downlink subframe configurations of neighboring cells. In this embodiment of the present invention, the NE1 sends the first RS to the antenna port of the second cell CELL2 of the NE2 by using the antenna port of the first cell CELL1, and the first RS passes through a channel between the CELL1 of the NE1 and the CELL2 of the NE2. In this way, the NE2 can cancel, based on the first RS, interference from downlink data of the CELL1 of the NE1 to uplink data of the NE2 in this case.

Further, the reference signal transmission method in this embodiment of the present invention is also applicable to a scenario in which a dynamic cell uplink-downlink subframe configuration is used for a TDD cell. In such a scenario, a cell uplink-downlink subframe configuration of the TDD cell is dynamically and automatically adjusted based on cell load. In this case, for neighboring TDD cells, it still cannot be ensured that a same configuration is used for cell uplink-downlink subframe configurations of the neighboring cells. Therefore, interference between the neighboring cells is inevitable. The reference signal transmission method provided in this embodiment of the present invention can also be used to cancel interference in such a scenario in which a cell uplink-downlink subframe configuration is dynamically configured, without any manual intervention.

Optionally, this embodiment of the present invention further provides a reference signal transmission starting manner. Only when a change in a cell uplink-downlink subframe configuration of a cell or a neighboring cell leads to inconsistency between uplink-downlink subframe configurations of the cell and the neighboring cell, the NE1 starts a method of sending the first RS so that the NE2 cancels interference from the NE1. In addition, this can also avoid a problem that a relatively large quantity of time-frequency resources are occupied for sending the first RS when interference is relatively small. Specifically, before S101, the method may further include: detecting, by the NE1, that uplink-downlink subframe configurations of the CELL1 and the CELL2 are inconsistent.

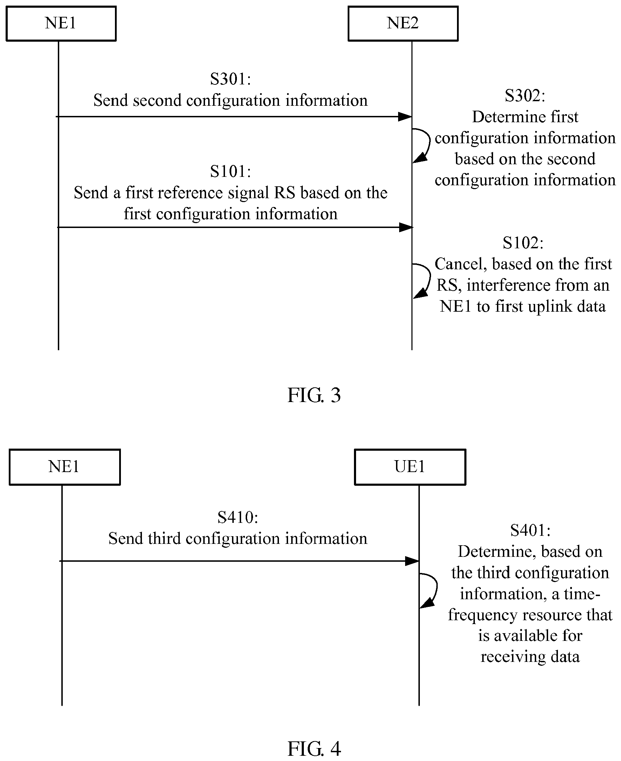

Optionally, there may be a plurality of methods for detecting, by the NE1, that the uplink-downlink subframe configurations of the CELL1 and the CELL2 are inconsistent. For example, the NE2 may periodically send, to the NE1, an uplink-downlink subframe configuration of a cell of the NE2. Alternatively, the NE1 may initiate a query message to the NE2 by using a network management system or in a proactive manner, to obtain an uplink-downlink subframe configuration of the CELL2. This is not limited in this embodiment of the present invention. FIG. 3 is a schematic flowchart of an optional implementation of the reference signal transmission method shown in FIG. 1.

FIG. 3 is a flowchart of an optional implementation of obtaining, by the NE2, the first configuration information in the method shown in FIG. 1.

On a basis of various implementations shown in FIG. 1 and FIG. 2, this embodiment of the present invention further provides two manners in which the NE2 obtains the first configuration information.

Optionally, in a first manner of obtaining the first configuration information by the NE2, the NE2 may prestore the first configuration information, and receive the first RS based on the time-frequency resource indicated by the first configuration information.

Optionally, in a second manner of obtaining the first configuration information by the NE2, the NE2 may prestore a part of the first configuration information, or may not store the first configuration information. Before sending the first RS, the NE1 sends, to the NE2, first-RS configuration information required by the NE2, to instruct the NE2 to receive the first RS based on the time-frequency resource that is occupied by the first RS and that is indicated by the first configuration information.

Specifically, referring to FIG. 3, before S101, the method may further include:

S301: The NE1 sends second configuration information to the NE2.

S302: The NE2 determines the first configuration information based on the second configuration information.

The NE2 may determine the first configuration information, that is, a time-frequency resource for receiving the first RS, based on the second configuration information. Optionally, if the NE2 prestores a part of the configuration information, the second configuration information needs to include only a part, of the first configuration information, not stored by the NE2. A person skilled in the art should be aware that S301 and S302 are not steps that need to be performed.

Optionally, if the NE1 needs to send the first RS to a plurality of network devices, the NE1 may send the first RS in a broadcast manner. To be specific, the first configuration information used for sending the first RS to different network devices is the same, except that channels through which the first RS passes are different.

According to the reference signal transmission method provided in this embodiment of the present invention, the first network device sends the reference signal to the second network device, where the reference signal passes through the channel between the first network device and the second network device, so that the second network device can cancel, based on the reference signal, the interference from the first network device to the uplink data sent by the user equipment served by the second network device. This improves uplink data transmission accuracy.

Optionally, to avoid a problem that sending the first RS by the NE1 affects downlink data reception of the user equipment served by the NE1 and uplink data sending of the user equipment served by the NE2, the user equipment UE may determine a time-frequency resource that is available for receiving data or sending data, where the time-frequency resource that is available for receiving data or sending data does not overlap with the time-frequency resource used for the first RS, and the first RS is sent by the first network device NE1 to which the first cell CELL1 belongs, to the second network device NE2 to which the second cell CELL2 belongs. Optionally, the user equipment may include UE1 served by the CELL1 and UE2 served by the CELL2. Optionally, the UE1 and the UE2 may alternatively move to the CELL2 and the CELL1, respectively.

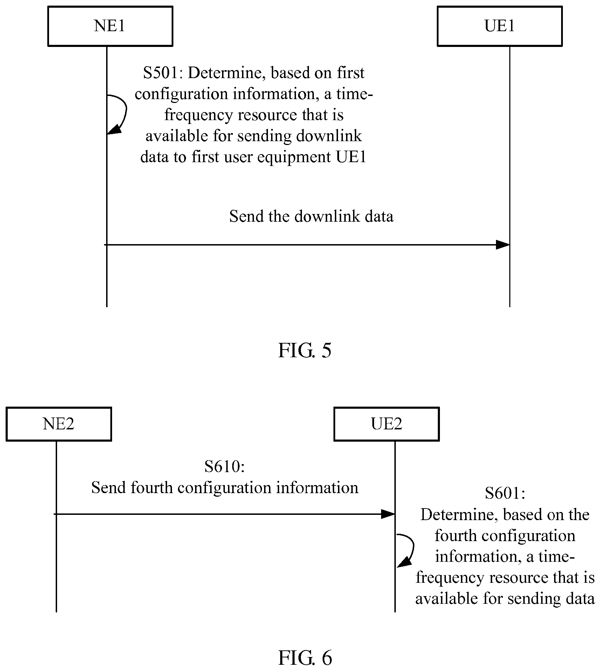

FIG. 4 is a schematic flowchart of a first optional implementation of Embodiment 2 of a reference signal transmission method. FIG. 5 is a schematic flowchart of a second optional implementation of Embodiment 2 of the reference signal transmission method. Said embodiment 2 is not according to the invention and is present for illustration purposes.

On a basis of the foregoing various implementations of FIG. 1 to FIG. 3, optionally, to avoid a problem that sending the first RS by the NE1 affects downlink data reception of the user equipment served by the NE1, this embodiment of the present invention further provides two optional implementations for ensuring UE downlink data transmission.

In addition to the NE1 and the NE2, an execution body of this embodiment of the present invention further includes user equipment UE. For example, a cell serving first user equipment UE1 may belong to the NE1. Optionally, the cell serving the UE1 may alternatively be a cell that belongs to the NE2 and that is adjacent to a cell of the NE1.

Referring to FIG. 4, in a first optional implementation for ensuring UE downlink data transmission, steps of this implementation may include:

S401: The UE1 determines, based on third configuration information, a time-frequency resource that is available for receiving data.

It should be noted that the UE1 may alternatively determine, based only on UE1-related first-RS configuration information instead of the entire first configuration information, a time-frequency resource that is available for receiving data, that is, a time-frequency resource used by the UE1 for receiving downlink (DownLink, DL for short) data. The third configuration information may be the same as the first configuration information, or may be a UE1-related time-frequency resource in the first configuration information. For example, the UE1 may consider only a time-frequency resource that is used for the first RS and whose subcarrier or symbol is the same as that used by the UE1. Optionally, a manner of obtaining the UE1-related first-RS configuration information in the first configuration information by the UE1 is the same as the following manner of obtaining, by the UE1, the third configuration information that is the same as the first configuration information.

In such an implementation, a manner of obtaining the third configuration information by the UE1 may be similar to a manner of obtaining the first configuration information by the NE2. For example, the UE1 may prestore the entire third configuration information, or may store a part of the first configuration information or not store the first configuration information, and the NE1 sends, before sending the first RS, first-RS configuration information required by the UE1 to the UE2. Specifically, before S401, the method may further include:

S410: The NE1 sends the third configuration information to the UE1.

The third configuration information is used to indicate a time-frequency resource that is available to the UE1 for receiving downlink data, and the time-frequency resource that is available to the UE1 for receiving downlink data from the NE1 does not overlap with the time-frequency resource that is indicated by the first configuration information and that is used by the NE1 for sending the first RS.

Optionally, the NE1 may send the third configuration information by using physical layer signaling. For example, the NE1 sends the third configuration information by using data control indication information DCI.

Optionally, the NE1 may send the third configuration information by using a radio resource control RRC message. If a subframe for the first RS may not be sent when the third configuration information is sent by using the RRC message, the UE may obtain a corresponding subframe from the RRC message, so as to reduce message sending overheads. Further, the NE1 may send the third configuration information by using higher layer signaling. Optionally, the higher layer signaling may be, for example, a broadcast message or UE-specific information.

Specifically, the NE1 may send the third configuration information by using the broadcast message and/or the UE-specific information. For example, the NE1 may send subframe information of the first RS and RE indication information of the first RS to the UE1 by using the broadcast message and the UE-specific information, respectively. For another example, the NE1 may send both subframe information of the first RS and RE indication information of the first RS to the UE1 by using the broadcast message. Alternatively, the NE1 may send both subframe information of the first RS and RE indication information of the first RS to the UE1 by using the UE-specific information.

Optionally, the NE1 may alternatively send the third configuration information to the UE1 by using a master information block MIB message or a system information block SIB message.

It should be noted that the UE-specific information usually includes a specified UE identifier, that is, the UE-specific information is sent to some of UEs; a UE identifier is not limited in the broadcast message, that is, the broadcast message may be sent to all UEs in a cell. When the third configuration information is sent by using the UE-specific information, because a subcarrier on which the UE is located can be determined, the third configuration information may include only a symbol at which the RE occupied by the first RS is located, so that the UE1 can determine the available time-frequency resource.

Optionally, the third configuration information includes the third RE indication information, and the RE that is occupied by the first RS and that is indicated by the third RE indication information overlaps with an RE of a physical downlink shared channel PDSCH of the UE1.

In this case, the UE1 receives the third configuration information sent by the NE1, and the time-frequency resource that is determined by the UE1 and that is available for receiving data is an RE that is in the PDSCH of the UE1 and that does not overlap with the RE occupied by the first RS.

For example, the UE1 removes an RE location occupied by the first RS from the PDSCH.

It should be noted that, if the UE1 prestores the first configuration information, S410 is not a mandatory step.

In such an implementation, the UE1 may receive data based on the time-frequency resource that is for receiving downlink data and that is indicated by the NE1 during downlink data scheduling, so that data on the time-frequency resource occupied by the first RS is not mistaken for downlink data for processing. In other words, in such an implementation, when the NE1 sends the first RS to the NE2, the UE1 can still correctly receive downlink data.

Referring to FIG. 5, in a second optional implementation for ensuring UE downlink data transmission, before the NE1 sends downlink data to the UE1, the method may include:

S501: The NE1 determines, based on the first configuration information, a time-frequency resource that is available for sending downlink data to the first user equipment UE1.

In such an implementation, the UE1 may receive data based on the time-frequency resource that is for receiving downlink data and that is indicated by the NE1 during downlink data scheduling, without performing special processing on the first RS in the downlink data. In other words, processing of the UE1 is exactly the same as that of existing UE. In other words, in such an implementation, network device improvement can be supported without replacing the UE.

FIG. 6 is a schematic flowchart of a first optional implementation of Embodiment 3 of a reference signal transmission method, said embodiment 3 not being according to the invention and being present for illustration purposes.

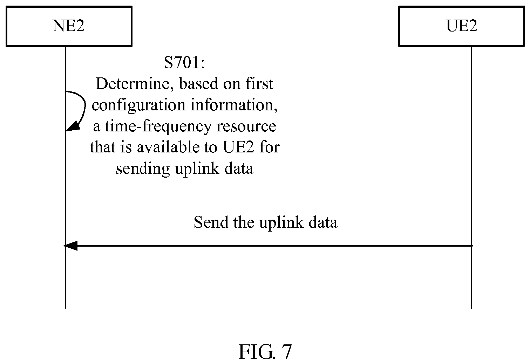

FIG. 7 is a schematic flowchart of a second optional implementation of Embodiment 3 of the reference signal transmission method, said embodiment 3 not being according to the invention and being present for illustration purposes.

On a basis of the foregoing various implementations and FIG. 1 to FIG. 5, similarly, to avoid a problem that sending uplink data by user equipment served by the NE2 affects receiving the first RS by the NE2, this embodiment of the present invention further provides two optional implementations for ensuring UE uplink data transmission. In addition to the NE1 and the NE2, an execution body of this embodiment of the present invention may further include user equipment UE. For example, a cell serving second user equipment UE2 may belong to the NE2. Optionally, the cell serving the UE2 may alternatively be a cell that belongs to the NE1 and that is adjacent to a cell of the NE2.

Referring to FIG. 6, in a first optional implementation for ensuring UE uplink data transmission, steps of this implementation may include:

S601: The UE2 determines, based on fourth configuration information, a time-frequency resource that is available for sending data.

Sending the first RS to the NE2 by the NE1 occupies a time-frequency resource used by the NE2 for receiving data sent by the UE2, that is, a time-frequency resource used by the UE2 for sending uplink (UpLink, UL for short) data. Therefore, the UE2 needs to determine, based on the time-frequency resource occupied by the first RS, the time-frequency resource that is available for sending the data, to avoid a collision of data sending.

It should be noted that the UE2 may alternatively determine, based only on UE2-related first-RS configuration information instead of the entire first configuration information, a time-frequency resource that is available for receiving data. To be specific, the fourth configuration information may be the same as the first configuration information, or may be a UE2-related time-frequency resource in the first configuration information. For example, the UE2 may consider only a time-frequency resource that is used for the first RS and whose subcarrier or symbol is the same as that used by the UE2. Optionally, a manner of obtaining the UE2-related first-RS configuration information by the UE2 is the same as the following manner of obtaining, by the UE2, the fourth configuration information that is the same as the first configuration information.

In such an implementation, a manner of obtaining the fourth configuration information by the UE2 may be similar to a manner of obtaining the first configuration information by the NE2. For example, the UE2 may prestore the entire fourth configuration information, or may store a part of the first configuration information or not store the first configuration information. After the NE2 obtains the first configuration information, for example, after the NE1 sends the second configuration information to the NE2, the NE2 sends first-RS configuration information required by the UE2 to the UE2. Specifically, before S601, the method may further include:
S610: The NE2 sends the fourth configuration information to the UE2.

The fourth configuration information is used to indicate a time-frequency resource that is available to the UE2 for sending uplink data to the NE2, and the time-frequency resource that is available to the UE2 for sending the uplink data to the NE2 does not overlap with the time-frequency resource that is indicated by the first configuration information and that is used by the NE1 for sending the first RS.

It should be noted that, if the UE2 prestores the fourth configuration information, S610 is not a mandatory step.

Optionally, the NE2 may send the fourth configuration information by using physical layer signaling. For example, the NE2 sends the fourth configuration information by using data control indication information DCI.

Optionally, the NE2 may send the fourth configuration information by using a radio resource control RRC message. If a subframe for the first RS may not be sent when the fourth configuration information is sent by using the RRC message, the UE may obtain a corresponding subframe from the RRC message, so as to reduce message sending overheads. Further, the NE2 may send the fourth configuration information by using higher layer signaling. Optionally, the higher layer signaling may be, for example, a broadcast message or UE-specific information.

Specifically, the NE2 may send the fourth configuration information by using the broadcast message and/or the UE-specific information. For example, the NE2 may send subframe information of the first RS and RE indication information of the first RS to the UE2 by using the broadcast message and the UE-specific information, respectively. For another example, the NE2 may send both subframe information of the first RS and RE indication information of the first RS to the UE2 by using the broadcast message. Alternatively, the NE2 may send both subframe information of the first RS and RE indication information of the first RS to the UE2 by using the UE-specific information.

Optionally, the NE2 may alternatively send the fourth configuration information to the UE2 by using a master information block MIB message or a system information block SIB message.

It should be noted that the UE-specific information usually includes a specified UE identifier, that is, the UE-specific information is sent to some of UEs; a UE identifier is not limited in the broadcast message, that is, the broadcast message may be sent to all UEs in a cell. When the fourth configuration information is sent by using the UE-specific information, because a subcarrier on which the UE is located can be determined, the fourth configuration information may include only a symbol at which the RE occupied by the first RS is located, so that the UE2 can determine the available time-frequency resource.

Optionally, the fourth configuration information includes the fourth RE indication information, and the RE that is occupied by the first RS and that is indicated by the fourth RE indication information overlaps with an RE of a physical uplink shared channel PUSCH of the UE2.

In this case, the UE2 receives the fourth configuration information sent by the NE2, and the time-frequency resource that is determined by the UE2 and that is available for sending data is an RE that is in the PUSCH of the UE2 and that does not overlap with the RE occupied by the first RS.

In such an implementation, the UE2 may send data based on the time-frequency resource that is for sending uplink data and that is indicated by the NE2 during uplink data scheduling, and avoid using, for sending the uplink data, the time-frequency resource occupied by the first RS, so as to prevent the NE2 from incorrectly using, as the first RS for processing, the uplink data sent by the UE2 on the time-frequency resource occupied by the first RS. In other words, in such an implementation, when the NE1 sends the first RS to the NE2, the UE can still correctly receive downlink data.

Referring to FIG. 7, in a second optional implementation for ensuring UE uplink data transmission, before the UE2 sends the uplink data, the method may include:

S701: The NE2 determines, based on the first configuration information, the time-frequency resource that is available to the UE2 for sending the uplink data.

In such an implementation, the UE2 may send the data based on the time-frequency resource that is for sending the uplink data and that is indicated by the NE2 during uplink data scheduling, so that the UE2 does not need to consider a collision, during uplink data sending, with the time-frequency resource occupied by the first RS. In other words, processing of the UE2 is exactly the same as that of existing UE. In other words, in such an implementation, network device improvement can be supported without replacing the UE.

Optionally, the UE1 may alternatively perform the method performed by the UE2 shown in FIG. 6 and FIG. 7. Correspondingly, the UE2 may alternatively perform the method performed by the UE1 shown in FIG. 4 and FIG. 5.

On a basis of the various implementations shown in FIG. 1 to FIG. 7, this embodiment of the present invention further provides six optional implementations of the first configuration information. The NE1 may send the first RS by using a combination of one or more of the following optional implementations of the first configuration information.

In a first optional implementation of the first configuration information, the CELL1 of the NE1 may include at least one antenna port, and the first RE indication information of the first configuration information may include:
a pilot pattern corresponding to each antenna port of the NE1, where the pilot pattern is used to indicate an RE location for sending the first RS through each antenna port of the NE1.

The RE location for sending the first RS through each antenna port may be corresponding to one pilot pattern, or the RE location for sending the first RS through each antenna port may constitute one pilot pattern. For example, the CELL1 of the NE1 may include one or more antenna ports. In this case, the first RE indication information may be one pilot pattern or a plurality of pilot patterns, and each antenna port may be corresponding to one pilot pattern. Each pilot pattern may include at least one RE location. Optionally, pilot patterns corresponding to more than one of the plurality of antenna ports may be the same.

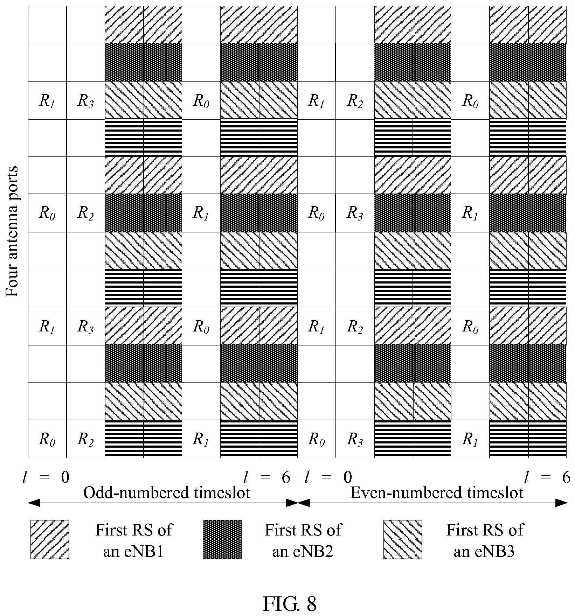

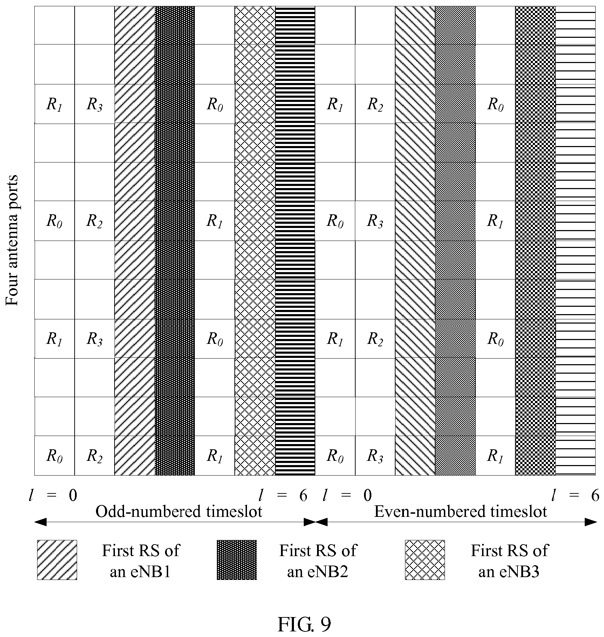

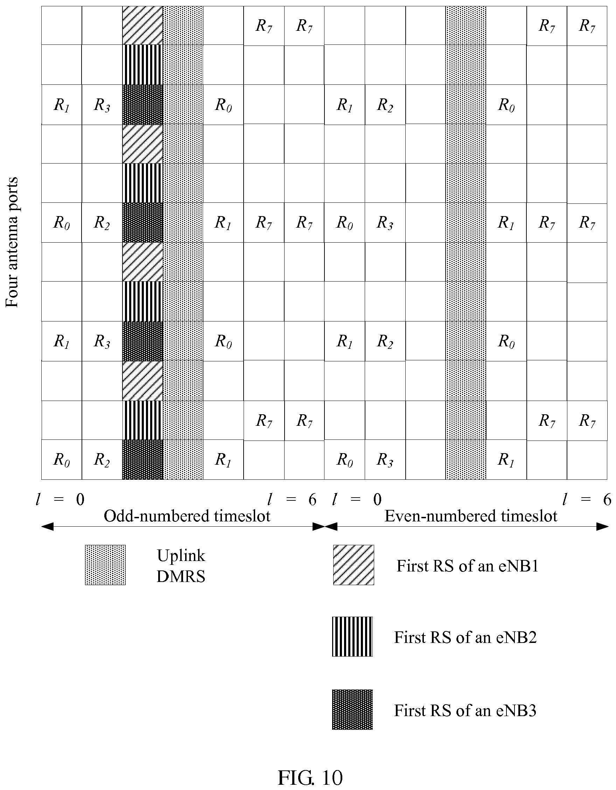

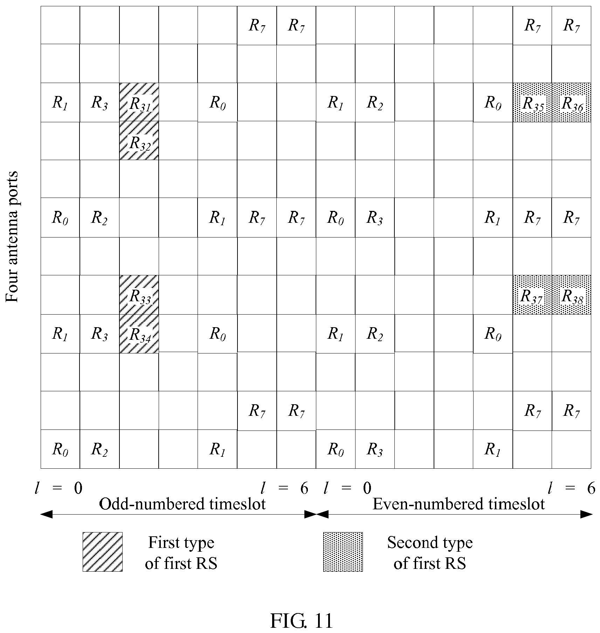

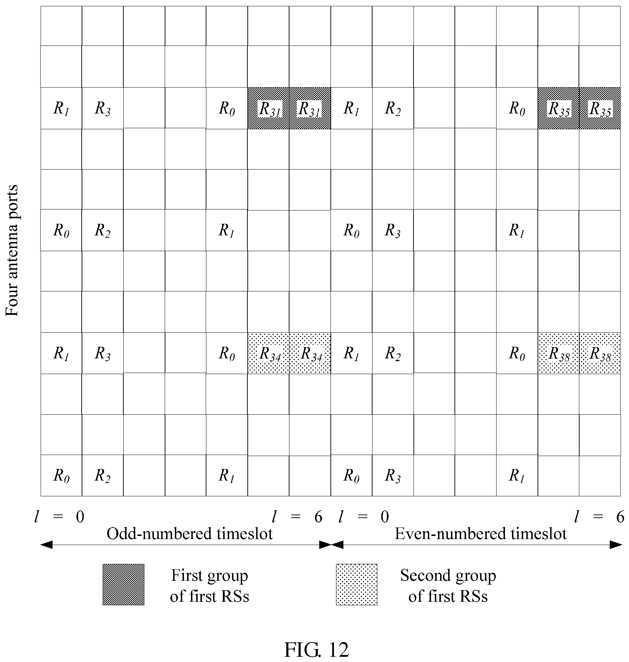

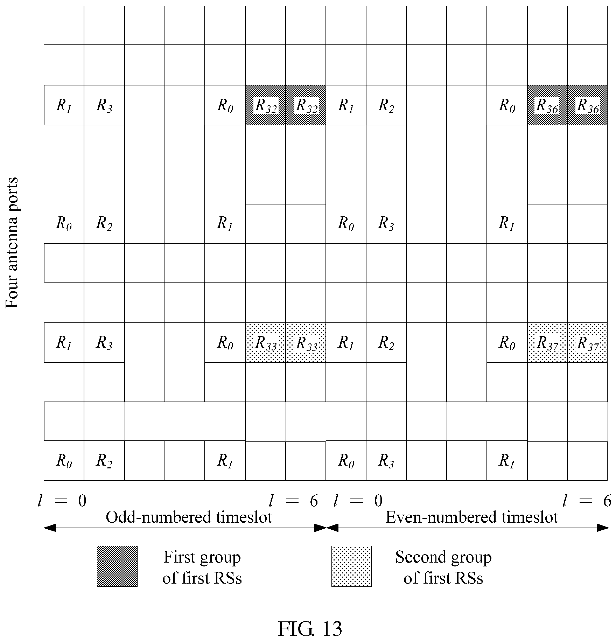

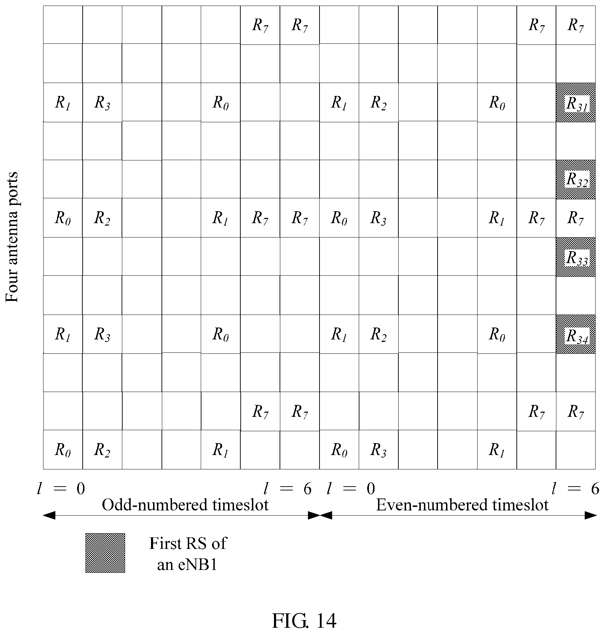

FIG. 8 is a schematic diagram of a first optional implementation of the first RE indication information of the first configuration information. FIG. 9 is a schematic diagram of a second optional implementation of the first RE indication information of the first configuration information. FIG. 10 is a schematic diagram of a third optional implementation of the first RE indication information of the first configuration information. FIG. 11 is a schematic diagram of a fourth optional implementation of the first RE indication information of the first configuration information. FIG. 12 is a first-part schematic diagram of a fifth optional implementation of the first RE indication information of the first configuration information. FIG. 13 is a second-part schematic diagram of the fifth optional implementation of the first RE indication information of the first configuration information. FIG. 14 is a schematic diagram of a sixth optional implementation of the first RE indication information of the first configuration information.

Optionally, if the CELL1 of the NE1 may include a plurality of antenna ports, RE locations for sending the first RS through all the antenna ports may be a group of REs at a same symbol but on different subcarriers, as shown in FIG. 8, or may be a group of REs located on a same subcarrier but at different symbols, as shown in FIG. 9. It should be noted that $R_0$, $R_1$, $R_2$, and $R_3$ are REs for a CRS. The NE1 may be an eNB1, and the NE2 may be an eNB2. An RE location for the first RS may avoid an RE location that collides with the CRS. Optionally, the RE location for the first RS may also avoid an RE location that collides with an uplink DMRS and/or a downlink DMRS. Reference may be made to FIG. 10. When RE locations that are occupied by the first RS and that are indicated by the first RE indication information in the first configuration information are located on a same subcarrier or are located at a same symbol, the third RE indication information carried in the third configuration information notified by the NE1 to the UE1 may not explicitly indicate a specific RE location, but indicate only a carrier or symbol at which the first RS is located, so as to reduce message sending overheads. Similarly, the fourth RE indication information carried in the fourth configuration information notified by the NE2 to the UE2 and the second RE indication information carried in the second configuration information notified by the NE1 to the NE2 may also indicate only the carrier or symbol at which the first RS is located, so as to reduce message sending overheads.

Optionally, the RE location for sending the first RS through each antenna port may be another predefined pilot pattern constituted by an RE location. Reference may be made to FIG. 11. The NE1 may have four antenna ports, where $R_{31}$, $R_{32}$, $R_{33}$, and $R_{34}$ are first optional RE locations occupied by the first RS on the antenna ports, and $R_{35}$, $R_{36}$, $R_{37}$, and $R_{38}$ may be second optional RE locations occupied by the first RS on the antenna ports. In a compatible optional pilot pattern solution, a pilot pattern corresponding to each antenna port may be one of a set of pilot patterns selectable for a channel state information-reference signal (Channel State Information Reference Signal, CSI-RS for short).

Specifically, a protocol provides a plurality of pilot patterns selectable for the CSI-RS, and any one of the pilot patterns may be selected for the first RS in this embodiment of the present invention. In this case, the second configuration information, the third configuration information, and the fourth configuration information may include only a type indication identifier of a pilot pattern for the CSI-RS, so that the RE location that is occupied by the first RS and that is indicated by the first RE indication information can be determined. In addition, because the first RS is sent by using the pilot pattern for the CSI-RS, in an existing processing process of the UE, data is not received or sent by using a time-frequency resource occupied by the CSI-RS. Therefore, when any pilot pattern for the CSI-RS is used as the pilot pattern for the first RS, the UE can support network device improvement without changing the processing process.

Optionally, RE locations that are occupied by the first RS and that are corresponding to different antenna ports in a pilot pattern may be the same. The NE1 may send the first RS to the NE2 in a code division manner through the different antenna ports based on the RE locations that are for the first RS and that are indicated by the pilot pattern.

Optionally, the second configuration information, the third configuration information, and the fourth configuration information may indicate only a pilot pattern type. The pilot pattern type may be a quantity of antenna ports, and a network device or user equipment acting as a receiver may determine the first configuration information based on the pilot pattern type. The pilot pattern type refers to a parameter that is used to determine a pilot pattern and that is included in a type indication identifier of the pilot pattern.

When a quantity of antenna ports corresponding to a based station, sending the first RS, to which the first cell belongs is greater than 1, the first RS may be sent by using different pilot patterns through the antenna ports. In this case, type indication identifiers of the pilot patterns may be used to indicate, for different antenna port numbers, the pilot patterns used for sending the first RS.

A type indication identifier of a pilot pattern includes a reference signal type, a quantity of antenna ports, an antenna port number, and a pilot pattern index.

The pilot pattern index is used to indicate one of one or more pilot patterns.

Optionally, the reference signal type may include a cell-to-cell reference signal, a CSI-RS, a DMRS, an SRS, and the like. Optionally, each of the CSI-RS, the DMRS, and the SRS may be corresponding to a selectable pilot pattern set, and each pilot pattern may be identified by using one or more of a quantity of antenna ports, an antenna port number, or a pilot pattern index. Optionally, when the first cell and the second cell pre-agree on a reference signal type for use, a type indication identifier of a pilot pattern may alternatively include no reference signal type, but include only one or more of a quantity of antenna ports, an antenna port number, or a pilot pattern index.

Optionally, when the reference signal type is the CSI-RS, the type indication identifier of the pilot pattern may include the quantity of antenna ports and the pilot pattern index, that is, the antenna port number is optional. The NE and the UE may determine the antenna port number based on the quantity of antenna ports, for example, select, based on a quantity of antenna ports and in a preset sequence, an antenna port number corresponding to the quantity of antenna ports from a set of antenna port numbers of selectable pilot patterns. For example, in LTE, antenna port numbers of pilot patterns selectable for sending a CSI-RS may be {15, 16, 17, 18, 19, 20, 21, 22}. When a quantity of antenna ports used for sending the CSI-RS is 1, a corresponding antenna port number is 15. When a quantity of antenna ports used for sending the CSI-RS is 2, corresponding antenna port numbers are {15, 16}. When a quantity of antenna ports for sending the CSI-RS is 4, corresponding antenna port numbers are {15, 16, 17, 18}. The rest may be deduced by analogy. Therefore, the type indication identifier of the pilot pattern may include only the quantity of antenna ports and the pilot pattern index. A pilot pattern index in an LTE protocol is used as an example. In the LTE protocol, 32 pilot patterns selectable for a CSI-RS are defined, and a pilot pattern index may range from 0 to 31. During specific implementation, a value may be different depending on a specific system. This is not limited herein.

Optionally, when the reference signal type is the DMRS, the type indication identifier of the pilot pattern may include the antenna port number. For example, in an LTE network, pilot patterns for sending a DMRS through antenna ports whose antenna port numbers are 7, 8, 11, and 13 are the same, and pilot patterns for sending the DMRS through antenna ports whose antenna port numbers are 9, 10, 12, and 14 are the same. In this case, when the reference signal type is the DMRS, the type indication identifier of the pilot pattern may include only the antenna port number. During specific implementation, a value may be different depending on a specific system. This is not limited herein.

Optionally, when the reference signal type is the SRS, the pilot pattern may be a pre-agreed pilot pattern, and the type indication identifier of the pilot pattern may indicate only the reference signal type. A specific pre-agreed pilot pattern may be a pilot pattern defined in an existing LTE protocol, or may be another pilot pattern. This is not limited herein.

Optionally, for a case in which a plurality of network devices send first RSs to each other, subframe information in first configuration information of first RSs sent to a same network device may be the same, and RE locations in the first configuration information of the first RSs sent to the same network device may be the same or may be different. If the RE locations are the same, a same RE may be multiplexed for all the first RSs in an OCC code division manner.

Referring to FIG. 12 and FIG. 13, the NE1 may be an eNB1, and the NE2 may be an eNB2, optionally. Cells of the eNB1, the eNB2, and an eNB3 each have four antenna ports. In this case, when the eNB1, the eNB2, and the eNB3 each send the first RS, a pilot pattern corresponding to each antenna port may be shown in FIG. 12 and FIG. 13. $R_{31}$, $R_{32}$, $R_{33}$, and $R_{34}$ are first optional RE locations occupied by the first RS on the antenna ports, and $R_{35}$, $R_{36}$, $R_{37}$, and $R_{38}$ may be second optional RE locations occupied by the first RS on the antenna ports.

Optionally, $R_{31}$, $R_{32}$, $R_{33}$, and $R_{34}$ may be RE locations for sending the first RS through four antenna ports of the eNB1, and $R_{35}$, $R_{36}$, $R_{37}$, and $R_{38}$ may be RE locations for sending the first RS through four antenna ports of the eNB2. In this case, OCC code division may be used for $R_{31}$ and $R_{32}$ of the eNB1, and OCC code division may be used for $R_{33}$ and $R_{34}$. Similarly, OCC code division may be used for $R_{35}$ and $R_{36}$ of the eNB2, and OCC code division may be used for $R_{37}$ and $R_{38}$.

Optionally, $R_{31}$, $R_{32}$, $R_{35}$, and $R_{36}$ may be RE locations for sending the first RS through four antenna ports of the eNB1, and $R_{33}$, $R_{34}$, $R_{37}$, and $R_{38}$ are RE locations for sending the first RS through four antenna ports of the eNB2.

Optionally, there may further be an NE3 that is the eNB3 and an NE4 that is an eNB4. In this case, $R_{31}$ and $R_{32}$ may be RE locations for sending the first RS through four antenna ports of the eNB1, $R_{33}$ and $R_{34}$ may be RE locations for sending the first RS through four antenna ports of the eNB2, $R_{35}$ and $R_{36}$ may be RE locations for sending the first RS through four antenna ports of the eNB3, and $R_{37}$ and $R_{38}$ may be RE locations for sending the first RS through four antenna ports of the eNB4.

In a second optional implementation of the first configuration information, a subframe for the first RS in the first configuration information may be a dedicated subframe.

It should be noted that a general subframe usually may be used for sending control information such as a PDCCH, data information such as a PDSCH, a reference signal such as a CRS, and other information. The dedicated subframe defined in this embodiment of the present invention is used for sending the first RS, or the first RS and control information. In other words, data information such as a PDSCH is not sent in the dedicated subframe.

Optionally, an MBSFN subframe configuration manner may be used as a configuration manner of the subframe for the first RS. An MBSFN subframe configuration result may be specifically: One or more of 10 subframes are an MBSFN subframe.

In a compatible optional solution in which a subframe and an RE location are combined, the subframe for the first RS in the first configuration information may be a subframe for sending a PDCCH or a CRS. Data included in the subframe may have the following cases. In a first case, only the first RS is included, and no PDCCH, CRS, PMCH, or other information is included. In a second case, the first RS and PDCCH information are included, or the first RS and CRS information are included, or the first RS, PDCCH information, and CRS information are included. Based on the second case of sending the first RS by using the subframe that is for sending the PDCCH or the CRS, the PDCCH information in the subframe determined by the subframe information of the first RS may be located at the first to the fourth symbols. Using such a sending manner does not affect a PDCCH information capacity and can reduce impact on normal interaction information of UE.

In another compatible optional solution in which a subframe and an RE location are combined, the subframe information of the first RS in the first configuration information may be one of a set of subframe information selectable for a demodulation reference signal (Demodulation Reference Signal, DMRS), and one of a set of symbol locations selectable for the DMRS may be selected as the first RE indication information in the first configuration information. For example, for details of subframe information and symbol locations selectable for the DMRS, refer to the 36.211 protocol, or refer to a definition in another protocol. This is not limited herein. Correspondingly, the first configuration information may include at least one of pilot pattern indication information and DMRS antenna port number indication information.

In still another compatible optional solution in which a subframe and an RE location are combined, the subframe information of the first RS in the first configuration information may be one of a set of subframe information selectable for a sounding reference signal SRS, and one of a set of symbol locations selectable for the SRS may be selected as the first RE indication information in the first configuration information. For details of subframe information and symbol locations selectable for the SRS, refer to the 36.211 protocol, or refer to a definition in another protocol.

It should be noted that, in a definition manner of subframe information of an SRS stipulated in a current protocol, a subframe period and a subframe offset are included. Therefore, subframe information selectable for the SRS may also be used for sending the first RS in this embodiment of the present invention, and the subframe for the first RS may also include a subframe period and a subframe offset. The subframe information and symbol locations selectable for the SRS are used for sending, so that when notifying the UE1, the NE1 may use a process of notifying UE of an SRS by a base station in the current protocol, with no need to use a newly defined message; the UE can also follow a manner of avoiding receiving and sending data in a subframe and an RE that are used for an SRS in the current protocol, to avoid receiving and sending data in the subframe and RE that are used for the first RS. Optionally, a subframe that the NE2 instructs the user equipment served by the NE2 to use for sending an SRS may be used as the subframe for the first RS. An RE that the NE2 instructs the user equipment served by the NE2 to use for sending the SRS may be used as the first RE indication information. For example, the NE1 may send the first RS by using the subframe and the RE that are used, by the user equipment served by the NE2, for sending the SRS. In such an optional implementation, the subframe and the RE that are used by the NE1 for sending the first RS to the NE2 do not occupy a time-frequency resource the same as that used, by the user equipment served by the NE2, for sending a PUSCH. Optionally, the NE1 may pre-obtain the subframe and the RE that are used, by the user equipment served by the NE2, for sending the SRS, so as to determine a selectable subframe and selectable first RE indication information of the first RS in the first configuration information. Optionally, the NE1 may not explicitly indicate that the subframe is the subframe for sending the SRS, but merely send, in an SRS sending manner, the first RS in a subframe and an RE that are selectable for the SRS.

If the subframe for the first RS is any one of the set of subframe information selectable for sending the SRS, and a symbol corresponding to the RE that is occupied by the first RS and that is indicated by the first RE indication information is any one of the set of symbol locations selectable for sending the SRS, included data on an RE at a symbol corresponding to the subframe determined by the subframe information of the first RS may have several cases. In a first case, only the first RS is included; in other words, information other than the first RS is excluded. In a second case, both SRS information and the first RS are included.

Based on the foregoing second case in which the first RS is sent by using the selectable RE in the selectable subframe for the SRS, the first RS and the SRS information may be located on different subcarriers. Using a manner in the second case may not affect an existing SRS sending process, and the first RS can also be sent by making full use of an idle RE resource in a subframe for sending the SRS, thereby reducing a waste of uplink resources of UE.

Based on the foregoing first case and second case in which the first RS is sent by using the subframe selectable for the SRS, the RE that is occupied by the first RS and that is indicated by the first RE indication information may alternatively be located at the last one or more symbols, for example, one, two, or three symbols, of the subframe determined by the subframe information of the first RS. Reference may be made to FIG. 14. The UE sends the SRS at the last symbol in a comb-teeth-shaped manner. Therefore, the first RS may be sent by using a blank area. Therefore, even if the first RS is being sent, SRS and uplink data sending of the UE is not affected, and only an SRS capacity is reduced.

Optionally, based on various specific implementations in the second optional implementation of the first configuration information, subcarriers occupied by the first RS may be alternate subcarriers. Such a sending manner has relatively small impact on uplink data of the UE. For example, if the UE sends the first RS at an interval of one subcarrier, six subcarriers are wasted for one RB; if the UE sends the first RS at an interval of two subcarriers, four subcarriers are wasted for one RB; and so on.

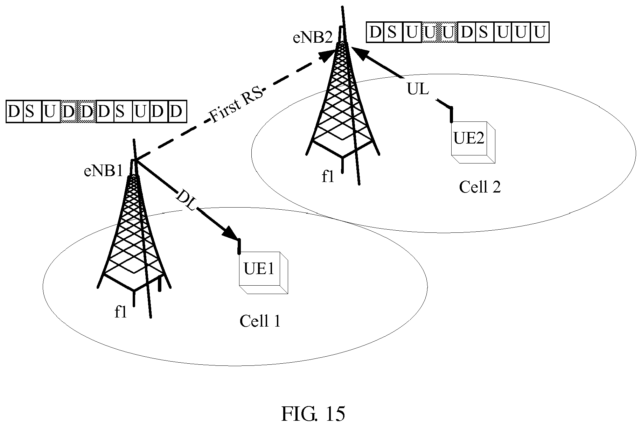

It should be noted that, if the network devices are TDD-mode base stations and have a same working frequency, for example, the NE1 is the eNB1, the NE2 is the eNB2, and working frequencies of the NE1 and the NE2 are both f1, the NE1 sends the first RS by using an antenna of the CELL1, a timeslot in which the NE1 sends the first RS needs to be configured as a downlink timeslot, the NE2 receives the first RS by using an antenna of the CELL2, and a timeslot in which the NE2 receives the first RS needs to be configured as an uplink timeslot. Referring to FIG. 15, FIG. 15 is a schematic diagram of a scenario of an optional implementation of the first configuration information.

In a third optional implementation of the first configuration information, the first configuration information may include a scrambling code. The scrambling code is used by the NE1 to scramble the first RS for sending. In addition to improving interference immunity of the first RS, the scrambling code can be further used as an identifier of the first RS. For example, when one network device receives reference signals that are sent by a plurality of network devices and that are provided in this embodiment of the present invention, that is, a plurality of NEIs send first RSs to one NE2, and each NE1 may use a device identifier of the NE1 as a scrambling code, the NE2 may distinguish, based on scrambling codes, between first RSs from different network devices, and may directly discard a reference signal that is scrambled by using a non-expected scrambling code. Optionally, the scrambling code may alternatively be a cell identity. In this case, the NE2 may further distinguish between first RSs sent through antenna ports of different cells of the NE1s.

In a fourth optional implementation of the first configuration information, the first configuration information may further include a period. To be specific, the NE1 periodically sends the first RS to the NE2.

Based on the fourth optional implementation of the first configuration information, the NE1 further receives, based on fifth configuration information, a second RS sent by the NE2. When the fifth configuration information includes a time-frequency resource used by the NE2 for sending the second RS, on a basis of the foregoing implementations, this embodiment of the present invention further provides an optional implementation of an reference information transmission method. The implementation provided in this embodiment of the present invention further includes:

sending, by the NE1, the first RS to the NE2 by using the subframe information of the first RS, and sending, by the NE2, the second RS to the NE1 by using subframe information of the second RS.

The first configuration information includes the subframe information of the first RS, and the fifth configuration information includes the subframe information of the second RS.

Optionally, the NE1 sends the first RS in a downlink timeslot of the subframe indicated by the subframe information of the first RS, and the NE2 sends the second RS in an uplink timeslot of the subframe indicated by the subframe information of the second RS.

An intersection set of the subframe information of the first RS and the subframe information of the second RS is nonempty. A front section and a rear section of the subframe determined by the subframe information of the first RS respectively include an uplink timeslot and a downlink timeslot, or a front section and a rear section of the subframe determined by the subframe information of the first RS respectively include a downlink timeslot and an uplink timeslot.

Optionally, the NE1 and the NE2 may belong to a same cell coordination set, the NE1 may periodically send the first RS to the NE2, and the NE2 may periodically send the second RS to the NE1.

In an optional implementation, it may be stipulated that, for network devices to which all cells in a same cell coordination set belong, in an $n^{th}$ subframe, a cell whose cell ID is identified as an odd number is in a sending state, and an NE to which the cell in the sending state belongs sends the first RS; a cell whose cell ID is identified as an even number is in a receiving state, and an NE to which the cell in the receiving state belongs receives the first RS. At a next sending moment, for example, in an $(n+T)^{th}$ subframe, a reverse operation is performed. To be specific, the cell whose cell ID is identified as the even number is in a sending state, and the NE to which the cell in the sending state belongs sends the first RS; the cell whose cell ID is identified as the odd number is in a receiving state, and the NE to which the cell in the receiving state belongs receives the first RS. To be specific, the network device to which the cell whose cell ID is the odd number belongs and the network device to which the cell whose cell ID is the even number belongs may use RS sending manners of the NE1 and the NE2, respectively. Optionally, another distinguishing manner may be used to distinguish between cells or NEs in a sending state and a receiving state.

Further, T may be a period for sending the first RS, the first configuration information may include the subframe information of the first RS, the fifth configuration information may include the subframe information of the second RS, the subframe information of the first RS includes a subframe period and a subframe offset of the first RS, the subframe information of the second RS includes a subframe period and a subframe offset of the second RS, the subframe period of the first RS is the same as the subframe period of the second RS, and an interval between the subframe offset of the first RS and the subframe offset of the second RS is one period.

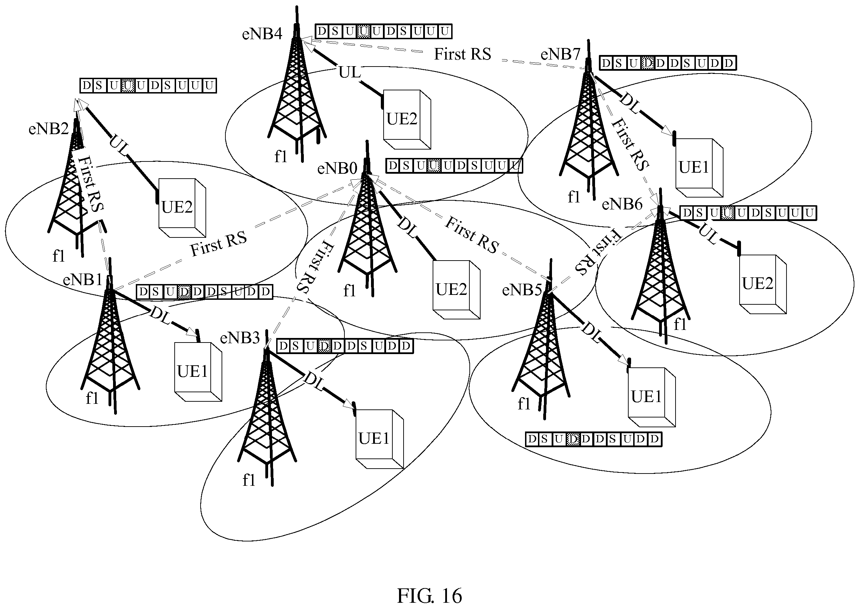

Optionally, the base stations may send the RSs in one downlink timeslot. At the same time, for base stations in a second cell coordination set, the timeslot is an uplink timeslot, and the base stations in the second cell coordination set simultaneously receive the RSs. In a next period, sending may be performed in a reverse direction. Referring to FIG. 16, FIG. 16 is a schematic diagram of a scenario of another optional implementation of the first configuration information. It should be noted that a period for the NE1 may be different from a period for the NE2.

Optionally, in a fifth optional implementation of the first configuration information, for different antenna ports of one network device, the network device may send the first RS in a time division multiplexing manner, a frequency division multiplexing manner, a code division multiplexing manner, or another time-frequency resource multiplexing manner, to reduce a waste of uplink resources or downlink resources of UE.

Optionally, in a sixth optional implementation of the first configuration information, for a one-to-many or many-to-many reference signal transmission scenario, the network device may use a time division multiplexing manner, a frequency division multiplexing manner, a code division multiplexing manner, or another time-frequency resource multiplexing manner, to reduce a waste of uplink resources or downlink resources of UE.

On a basis of the method shown in FIG. 1 to FIG. 7, the following describes a relationship between the second configuration information, the third configuration information, and the fourth configuration information.

Content of the second configuration information, the third configuration information, and the fourth configuration information each may be a subset of the first configuration information, and may include different content, provided that the following is ensured: The time-frequency resource for sending the first RS can be determined based on the second configuration information, to ensure that the NE2 can receive the first RS; a time-frequency resource that may collide with UE receiving the third configuration information can be determined based on the third configuration information, to ensure that the UE receiving the third configuration information does not receive data incorrectly; and a time-frequency resource that may collide with UE receiving the fourth configuration information can be determined based on the fourth configuration information, to ensure that the UE receiving the fourth configuration information does not send data incorrectly, so that receiving the first RS by the NE2 is not affected.

On a basis of the foregoing various implementations, this embodiment of the present invention provides several optional implementations of the second configuration information, the third configuration information, and the fourth configuration information.

Before the NE1 sends the first RS to the NE2 based on the first configuration information in S101, the NE1 sends the second configuration information to the NE2, where the second configuration information includes the subframe information of the first RS in the first configuration information, and the second RE indication information.

The second RE indication information may include the first RE indication information in the first configuration information, the symbol at which the RE that is occupied by the first RS and that is indicated by the first RE indication information is located, the subcarrier on which the RE that is occupied by the first RS and that is indicated by the first RE indication information is located, or a type indication identifier of a pilot pattern corresponding to each antenna port used by the NE1 to send the first RS.

Optionally, the NE1 may send the third configuration information to the UE1 before the NE1 sends downlink data to the UE1. The third configuration information may include the subframe information of the first RS in the first configuration information, and/or the third RE indication information.

The third RE indication information includes the first RE indication information, the symbol at which the RE that is occupied by the first RS and that is indicated by the first RE indication information is located, the subcarrier on which the RE that is occupied by the first RS and that is indicated by the first RE indication information is located, or the type indication identifier of the pilot pattern corresponding to each antenna port of the NE1.

Similarly, the fourth configuration information may include the subframe information of the first RS in the first configuration information, and/or the fourth RE indication information.

The fourth RE indication information includes the RE that is occupied by the first RS and that is indicated by the first RE indication information, the symbol at which the RE that is occupied by the first RS and that is indicated by the first RE indication information is located, the subcarrier on which the RE that is occupied by the first RS and that is indicated by the first RE indication information is located, or the type indication identifier of the pilot pattern corresponding to each antenna port of the CELL1.

Optionally, the NE2 may send the fourth configuration information to the UE2 by using a resource block assignment Resource Block Assignment message.

On the basis of the method shown in FIG. 1 to FIG. 7, it should be noted that this embodiment of the present invention further provides four types of new message formats for sending, by the network device, the third configuration information and the fourth configuration information. The third configuration information and the fourth configuration information in this embodiment of the present invention may be sent by using at least one message in the following message formats.

The first RS may be referred to as a cell-to-cell (cell to cell, C2C for short) reference signal. Configurations and newly-added information element formats of the cell-to-cell reference signal are as follows:

A first type of newly-added message format is a newly-added information element in RRC signaling. Newly-added configuration information of the cell-to-cell reference signal may include a period for the first RS, a time-frequency resource for the first RS, a quantity of antenna ports for the first RS, and the like.

**-C2C-RS-Config**

The IE C2C-RS-Config is used to specify the C2C (cell to cell) reference signal configuration.

*C2C-RS-Config* information elements

```
C2C RS-ConfigCommon ::=    SEQUENCE {

    c2c rs-SubframeConfig    ENUMERATED {

                    sc0, sc1, sc2, sc3, sc4, sc5, sc6, sc7,

                    sc8, sc9, sc10, sc11, sc12, sc13, sc14, sc15},

    c2c rs-resourceConfig   BIT STRING (SIZE (2)),

    c2c rs-antennaPortsCount   ENUMERATED {

                    n1, n2, n4, n8, n16, spare1},   OPTIONAL    -- Need ON

    }
```

A second type of newly-added message format is a newly-added information element in a broadcast message. A new message format of a broadcast message may include a period for the first RS, a time-frequency resource for the first RS, a quantity of antenna ports for the first RS, and the like. The broadcast message may be sent by using a PBCH.
For example, newly-added information elements in a MIB message are as follows:

*MasterInformationBlock*

```
-- ASN1START

MasterInformationBlock ::=    SEQUENCE {

    dl-Bandwidth                ENUMERATED {n6, n15, n25, n50, n75, n100},

    phich-Config                PHICH-Config,

    systemFrameNumber           BIT STRING (SIZE (8)),

        c2c rs-SubframeConfig   ENUMERATED {

                    sc0, sc1, sc2, sc3, sc4, sc5, sc6, sc7,

                    sc8, sc9, sc10, sc11, sc12, sc13, sc14, sc15},

        c2c rs-resourceConfig    BIT STRING (SIZE (2)),

        c2c rs-antennaPortsCount    ENUMERATED {

                    n1, n2, n4, n8, n16, spare1},            OPTIONAL-- Need ON

    spare    BIT STRING (SIZE (10))

    }
```

A third type of newly-added message format is a newly-added information element in physical layer signaling. A new message format of physical layer signaling includes two types. A first type of physical layer signaling is used to indicate a time-frequency resource that is available for downlink data. A C2C RS configuration indication may be added to DCI, and a flag bit C2C RS indicator is used to indicate the RE location occupied by the first RS. An enumerated value of the flag bit may be corresponding to one or more pilot patterns. Optionally, the flag bit may carry a type indication identifier of the pilot pattern, for example, may be a combination of one or more of a reference signal type, a quantity of antenna ports, an antenna port number, or a pilot pattern index. Specifically, the following information is added to the DCI.

- Resource block assignment:
- For resource allocation type 0 as defined in section 7.1.6.1 of [3]
- bits provide the resource allocation
- For resource allocation type 1 as defined in section 7.1.6.2 of [3]
- bits of this field are used as a header specific to this resource allocation type to indicate the selected resource blocks subset
- 1 bit indicates a shift of the resource allocation span
- bits provide the resource allocation

where the value of P depends on the number of DL resource blocks as indicated in section [7.1.6.1] of [3]

- for C2C RS indicator-0 or 1/2/3 bits

A second type of physical layer signaling is used to indicate a time-frequency resource that is available for uplink data. A C2C RS configuration indication may be added to DCI, and a flag bit C2C RS symbol indicator may indicate only a symbol occupied by the first RS. Specifically, the following information is added to the DCI.

- Resource block assignment:
- For resource allocation type 0 as defined in section 7.1.6.1 of [3]
- bits provide the resource allocation
- For resource allocation type 1 as defined in section 7.1.6.2 of [3]
- bits of this field are used as a header specific to this resource allocation type to indicate the selected resource blocks subset
- 1 bit indicates a shift of the resource allocation span
- bits provide the resource allocation

where the value of P depends on the number of DL resource blocks as indicated in section [7.1.6.1] of [3]

- for C2C RS symbol indicator-0 or 1/2 bits

Optionally, in the foregoing various manners of sending the second configuration information, the third configuration information, and the fourth configuration information to reduce message overheads, for example, sending the first RS by using alternate subcarriers, sharing a subframe with an SRS, or sending cell-to-cell reference signals of interactive network devices by using a common timeslot, a transmission bit rate of a network device can be improved. Specifically, a bit rate calculation formula is:

$$\text{Bit rate} = (\text{Available REs} * \text{Modulation scheme} - \text{CRC verification code})/\text{tbsize}$$

(Transmitted information bit)

It can be learned from the foregoing that a transmission bit rate of a network device can be improved when the various implementations of the first configuration information that are provided in this embodiment of the present invention and that reduce a quantity of occupied REs are used.

On a basis of the method shown in FIG. 2, this embodiment of the present invention further provides four optional implementations of sending, by the NE1, the first RS to the NE2.

It should be noted that the NE1 may send the first RS to the NE2 by using digital beamforming and analog beamforming.

In a first optional sending manner of the first RS, if the NE1 sends the first downlink data to the UE1 in a digital beamforming form, the sending, by the NE1, the first RS to the NE2 may specifically include: sending, by the NE1, the first RS to the NE2 in a non-beamforming form.

The sending, by the NE1, the first downlink data and the scheduling result of the first downlink data to the NE2 may specifically include: sending, by the NE1, a precoding matrix of the first downlink data to the NE2, so that the NE2 obtains the un-precoded first channel based on the first RS that is sent in the non-beamforming form, and restores the first interference signal based on the un-precoded first channel, the precoding matrix of the first downlink data, and the scheduling result of the first downlink data.

The first downlink data may be un-coded or may be coded. If the first downlink data is un-coded, the precoding matrix also needs to be sent to the NE2.

In a second optional sending manner of the first RS, if the NE1 sends the first downlink data to the UE2 in an analog beamforming form, the sending, by the NE1, the first RS to the NE2 may specifically include: sending, by the NE1, the first RS to the NE2 in the analog beamforming form.

In a third optional sending manner of the first RS, if the NE1 sends the first downlink data to the UE2 in a digital beamforming form, the sending, by the NE1, the first RS to the NE2 may specifically include: sending, by the NE1, the first RS to the NE2 in the digital beamforming form.

In a fourth optional sending manner of the first RS, if the NE1 sends the first downlink data to the UE2 in a digital beamforming form,

the sending, by the NE1, the first RS to the NE2 specifically includes: sending, by the NE1, the first RS to the NE2 in the digital beamforming form; and

the sending, by the NE1, the first downlink data and the scheduling result of the first downlink data to the NE2 specifically includes:

sending, by the NE1, the first downlink data and the scheduling result of the first downlink data in the digital beamforming form to the NE2.

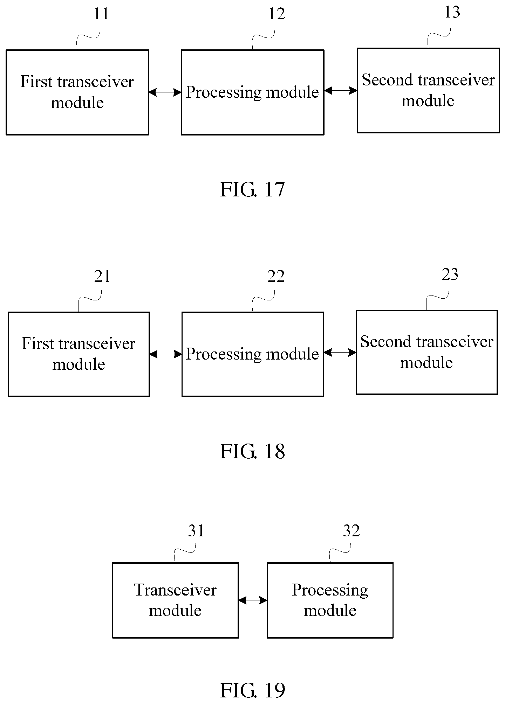

FIG. 17 is a schematic structural diagram of a network device according to an embodiment of the present invention.

As shown in FIG. 17, the network device provided in this embodiment of the present invention may be used as a first network device NE1, and the NE1 may include:

a first transceiver module 11, configured to send, for the NE1 to which a first cell CELL1 belongs, a first reference signal RS based on first configuration information to a second network device NE2 to which a second cell CELL2 belongs, where the first configuration information includes information used to indicate a time-frequency resource used by the NE1 for sending the first RS.

The first RS is used by the NE2 to cancel, based on the first RS, interference from the NE1 to first uplink data. The first uplink data is from user equipment served by the NE2.

Optionally, the NE1 further includes:

a processing module 12, configured to detect that uplink-downlink subframe configurations of the CELL1 and the CELL2 are inconsistent.

Optionally, the NE1 may further include:

a second transceiver module 13, configured to send first downlink data and/or a scheduling result of first downlink data to the NE2, where the first downlink data is sent by the NE1 to user equipment served by the first cell CELL1 of the NE1.

Optionally, the second transceiver module 13 may be configured to send the first downlink data and/or the scheduling result of the first downlink data to the NE2 by using an X2 interface between the NE1 and the NE2.

Optionally, the first configuration information includes:

subframe information of the first RS; and/or

first resource element RE indication information, where the first RE indication information is used to indicate an RE occupied by the first RS.

Optionally, the first cell of the NE1 includes at least one antenna port, and the first RE indication information includes:

a pilot pattern corresponding to each antenna port of the CELL1, where the pilot pattern is used to indicate an RE for sending the first RS through each antenna port of the first cell.

Optionally, at least one of pilot patterns corresponding to all antenna ports of the NE1 belongs to a set of pilot patterns selectable for a channel state information-reference signal CSI-RS.

Optionally, a subframe determined by the subframe information of the first RS belongs to a set of subframes selectable for a sounding reference signal SRS of the NE2.

Optionally, the RE that is occupied by the first RS and that is indicated by the first RE indication information is different from an RE used for the SRS of the NE2; and/or the RE that is occupied by the first RS and that is indicated by the first RE indication information is different from a subcarrier on which an RE used for the SRS of the NE2 is located; and/or the RE that is occupied by the first RS and that is indicated by the first RE indication information is different from a symbol at which an RE used for the SRS of the NE2 is located.

Optionally, a symbol at which the RE that is occupied by the first RS and that is indicated by the first RE indication information is located is the last symbol of the subframe determined by the subframe information of the first RS.

Optionally, the subframe information of the first RS indicates a dedicated subframe, and the dedicated subframe carries the first RS.

Optionally, the subframe determined by the subframe information of the first RS may include only the first RS.

Alternatively, the subframe determined by the subframe information of the first RS may include the first RS and physical downlink control channel PDCCH information, or include the first RS and CRS information, or include the first RS, PDCCH information, and CRS information.

Optionally, the subframe determined by the subframe information of the first RS includes both the first RS and the PDCCH information, where the PDCCH information is located at the first to the fourth symbols.

Optionally, the first configuration information further includes a scrambling code. The scrambling code is used by the NE1 to scramble the first RS.

Optionally, the second transceiver module 13 is further configured to send second configuration information to the NE2, where the second configuration information includes the subframe information of the first RS in the first configuration information, and/or second RE indication information.

The second RE indication information includes the first RE indication information in the first configuration information; or

at least one of the symbol at which the RE that is occupied by the first RS and that is indicated by the first RE indication information is located, a subcarrier on which the RE that is occupied by the first RS and that is indicated by the first RE indication information is located, and a type indication identifier of the pilot pattern corresponding to each antenna port used by the NE1 to send the first RS.

Optionally, the processing module 14 is further configured to send, based on the first configuration information, a time-frequency resource that is available for sending downlink data to first user equipment UE1 served by the first cell.

The first transceiver module 11 is further configured to send third configuration information to the UE1.

The third configuration information includes the subframe information of the first RS in the first configuration information, and/or third RE indication information.

The third RE indication information includes the first RE indication information; or

at least one of the symbol at which the RE that is occupied by the first RS and that is indicated by the first RE indication information is located, the subcarrier on which the RE that is occupied by the first RS and that is indicated by the first RE indication information is located, and the type indication identifier of the pilot pattern corresponding to each antenna port of the NE1.

Optionally, the first transceiver module 11 is specifically configured to send the third configuration information by using a broadcast message and/or UE-specific information. Optionally, the first transceiver module 11 is specifically configured to send the third configuration information by using higher layer signaling and/or physical layer signaling. Optionally, the higher layer signaling includes a radio resource control RRC message. Optionally, the RRC message includes a master information block MIB message or a system information block SIB message. Optionally, the physical layer signaling includes data control indication information DCI.

Optionally, the third configuration information includes the third RE indication information, and the RE that is occupied by the first RS and that is indicated by the third RE indication information overlaps with an RE of a physical downlink shared channel PDSCH of the UE1.

In this case, the first transceiver module 11 is specifically configured to send the third configuration information to the UE1 by using the UE-specific information, where the third configuration information includes the third RE indication information. An RE that is indicated by the third RE indication information and on which the first RS collides with the PDSCH of the UE1 is an intersection set of the RE that is occupied by the first RS and that is indicated by the first RE indication information and the PDSCH of the UE1.

Optionally, the third configuration information includes the subframe information of the first RS and the third RE indication information. In this case, the first transceiver module 11 is specifically configured to send the subframe information of the first RS in the third configuration information to the UE1 by using the broadcast message; and the first transceiver module 11 is further specifically configured to send the third RE indication information in the third configuration information to the UE1 by using the UE-specific information.

Optionally, the first transceiver module 11 is further configured to receive, based on fifth configuration information, a second RS sent by the NE2, where the fifth configuration information includes a time-frequency resource used by the NE2 for sending the second RS.

Optionally, the first configuration information includes the subframe information of the first RS, and the fifth configuration information includes subframe information of the second RS.

The first transceiver module 11 is further configured to send the first RS in the subframe determined by the subframe information of the first RS.

The first transceiver module 11 is further configured to receive the second RS in a subframe determined by the subframe information of the second RS.

Optionally, an intersection set of the subframe determined by the subframe information of the first RS and the subframe determined by the subframe information of the second RS is nonempty, and a front section and a rear section of the subframe determined by the subframe information of the first RS respectively include an uplink timeslot and a downlink timeslot, or a front section and a rear section of the subframe determined by the subframe information of the first RS respectively include a downlink timeslot and an uplink timeslot.

In this case, the first transceiver module 11 is further configured to send the first RS in the downlink timeslot of the subframe indicated by the subframe information of the first RS, and receive the second RS in the uplink timeslot of the subframe indicated by the subframe information of the first RS.

Optionally, the first configuration information includes the subframe information of the first RS, the fifth configuration information includes the subframe information of the second RS, the subframe information of the first RS includes a subframe period and a subframe offset of the first RS, the subframe information of the second RS includes a subframe period and a subframe offset of the second RS, the subframe period of the first RS is the same as the subframe period of the second RS, and an interval between the subframe offset of the first RS and the subframe offset of the second RS is one period.

The first transceiver module is further configured to periodically send the first RS to the NE2, and periodically receive the second RS sent by the NE2.

Optionally, the first transceiver module 11 receives, through each antenna port of the CELL1, the second RS that is sent through each antenna port of the CELL2 of the NE2.

The subframe information of the second RS is determined by the NE2 based on a cell identity of the CELL2.

Optionally, the cell identity of the CELL2 is an even number, a cell identity of the CELL1 is an odd number, the subframe determined by the subframe information of the first RS is a first subframe, the subframe determined by the subframe information of the second RS is a second subframe, the second subframe is a subframe after the first subframe, and there is an interval of one subframe period of the first RS between the first subframe and the second subframe.

Alternatively, the cell identity of the CELL2 is an odd number, a cell identity of the CELL1 is an even number, the subframe determined by the subframe information of the first RS is a first subframe, the subframe determined by the subframe information of the second RS is a second subframe, the second subframe is a subframe after the first subframe, and there is an interval of one subframe period of the first RS between the first subframe and the second subframe.

Optionally, the first transceiver module 11 is configured to send the first RS to each antenna port of the CELL2 of the NE2 through each antenna port of the CELL1.

The subframe information of the first RS is determined by the NE1 based on the cell identity of the CELL1.

Optionally, the CELL1 and the CELL2 belong to one cell coordination set.

The network device in this embodiment may be configured to implement the technical solutions in the method embodiment shown in FIG. 1 to FIG. 16, and implementation principles and technical effects thereof are similar. Details are not described herein again.

FIG. 18 is a schematic structural diagram of another network device according to an embodiment of the present invention.

As shown in FIG. 18, the network device provided in this embodiment of the present invention may be used as a second network device NE2, and the NE2 may include:

a first transceiver module 21, configured to receive, for the NE2 to which a second cell CELL2 belongs, based on first configuration information, a first reference signal RS sent by a first network device NE1 to which a first cell CELL1 belongs, where the first configuration information includes information used to indicate a time-frequency resource used by the NE1 for sending the first RS.

Optionally, the NE2 may further include a processing module 22, configured to cancel, based on the first RS, interference from the NE1 to first uplink data, where the first uplink data is from user equipment served by the NE2.

Optionally, the processing module 22 may be configured to: obtain a first channel between the NE1 and the NE2 based on the first RS;

obtain a first interference signal based on the first channel; and
demodulate the first uplink data based on the first interference signal.

Optionally, the NE2 may include a second transceiver module 13, configured to receive first downlink data and/or a scheduling result of first downlink data sent by the NE1, where the first downlink data is sent by the NE1 to user equipment served by the NE1.

In this case, the processing module is specifically configured to restore the first interference signal based on the first channel and at least one of the first downlink data and the scheduling result of the first downlink data.

Optionally, the second transceiver module 23 is specifically configured to receive the first downlink data and the scheduling result of the first downlink data by using an X2 interface between the NE2 and the NE1.

Optionally, the first indication information includes:

subframe information of the first RS; and
first resource element RE indication information, where the first RE indication information is used to indicate an RE occupied by the first RS.

Optionally, the second transceiver module 23 is further configured to receive second configuration information sent by the NE1, where the second configuration information includes the subframe information of the first RS, and/or second RE indication information.

The second RE indication information includes an RE location for the first RS, or at least one of a symbol at which the RE occupied by the first RS is located, a subcarrier on which the RE occupied by the first RS is located, and a type indication identifier of a pilot pattern corresponding to each antenna port used in the CELL1 to send the first RS.

The processing module 22 is further configured to determine the first configuration information based on the second configuration information.

Optionally, the processing module 22 is further configured to determine, based on the first configuration information, an available time-frequency resource to be allocated to second user equipment UE2 for sending uplink data, where the UE2 is served by the CELL2.

Optionally, the first transceiver module 21 is further configured to send fourth configuration information to the UE2.

Optionally, the fourth configuration information includes the subframe information of the first RS in the first configuration information, and/or fourth RE indication information.

The fourth RE indication information includes at least one of the RE that is occupied by the first RS and that is indicated by the first RE indication information, the symbol at which the RE that is occupied by the first RS and that is indicated by the first RE indication information is located, the subcarrier on which the RE that is occupied by the first RS and that is indicated by the first RE indication information is located, or the type indication identifier of the pilot pattern corresponding to each antenna port of the CELL1.

Optionally, the first transceiver module 21 is specifically configured to send the third configuration information by using a broadcast message and/or UE-specific information. Optionally, the first transceiver module 21 is specifically configured to send the third configuration information by using higher layer signaling and/or physical layer signaling. Optionally, the higher layer signaling includes a radio resource control RRC message. Optionally, the RRC message includes a master information block MIB message or a system information block SIB message. Optionally, the physical layer signaling includes data control indication information DCI.

Optionally, the first configuration information includes the first RE indication information, and the RE that is occupied by the first RS and that is indicated by the first RE indication information overlaps with an RE of a physical uplink shared channel PUSCH of the UE2.

In this case, the first transceiver module 21 is further configured to send the fourth configuration information to the UE2 by using the UE-specific information, where the fourth configuration information includes the fourth RE indication information. An RE location that is indicated by the fourth RE indication information and at which the PUSCH collides with the RE occupied by the first RS is an intersection set of an RE location indicated by the first RE indication information and the PUSCH of the UE2.

Optionally, the fourth configuration information includes a subframe for the first RS and the fourth RE indication information. In this case, the first transceiver module 21 is specifically configured to send the subframe information of the first RS in the fourth configuration information to the UE2 by using the broadcast message.

The first transceiver module 21 is specifically configured to send the fourth RE indication information in the fourth configuration information to the UE2 by using the UE-specific information.

The network device in this embodiment may be configured to implement the technical solutions in the method embodiment shown in FIG. 1 to FIG. 16, and implementation principles and technical effects thereof are similar. Details are not described herein again.

FIG. 19 is a schematic structural diagram of user equipment according to an embodiment of the present invention.

As shown in FIG. 19, the user equipment provided in this embodiment of the present invention may include:

a processing module 32, configured to determine, based on third configuration information, a time-frequency resource that is available for receiving data or sending data.

The third configuration information is used to indicate all or some of time-frequency resources occupied by a first reference signal RS. The first RS is sent by a first network device NE1 to which a first cell CELL1 belongs, to a second network device NE2 to which a second cell CELL2 belongs.

Optionally, the user equipment may further include:

a transceiver module 31, configured to receive the third configuration information.

Optionally, the transceiver module 31 is configured to receive a broadcast message and/or UE-specific information, where the broadcast message and/or the UE-specific information include/includes the third configuration information.

Optionally, the transceiver module 31 is configured to receive higher layer signaling and/or physical layer signaling, where the higher layer signaling and/or the physical layer signaling include/includes the third configuration information. Optionally, the higher layer signaling includes a radio resource control RRC message. Optionally, the RRC message includes a master information block MIB message or a system information block SIB message. Optionally, the physical layer signaling includes data control indication information DCI. Optionally, the third configuration information includes subframe information of the first RS, and/or third RE indication information.

The third RE indication information includes an RE location occupied by the first RS; or

at least one of a symbol at which an RE occupied by the first RS is located, a subcarrier on which an RE occupied by the first RS is located, and a type indication identifier of a pilot pattern corresponding to an RE occupied by the first RS.

Optionally, a cell serving the user equipment is the CELL1, the third configuration information is sent by the NE1, and the processing module 32 may be specifically configured to determine, based on the third configuration information, a time-frequency resource that is available for receiving data.

Optionally, the third configuration information includes the third RE indication information, and the RE that is occupied by the first RS and that is indicated by the third RE indication information overlaps with an RE of a physical downlink shared channel PDSCH of the user equipment.

In this case, the transceiver module 31 is specifically configured to receive the third configuration information by using UE-specific information sent by the NE1, and the time-frequency resource that is determined by the processing module 32 and that is available for receiving data is an RE that is in the PDSCH of the user equipment and that does not overlap with the RE occupied by the first RS.

Optionally, a cell serving the user equipment is the CELL2, the third configuration information is sent by the NE2, and the processing module 32 may be specifically configured to determine, based on the third configuration information, a time-frequency resource that is available for sending data.

Optionally, the third configuration information includes the third RE indication information, and the RE that is occupied by the first RS and that is indicated by the third RE indication information overlaps with an RE of a physical uplink shared channel PUSCH of the user equipment.

In this case, the transceiver module 31 is specifically configured to receive the third configuration information by using UE-specific information sent by the NE2, and the time-frequency resource that is determined by the processing module 32 and that is available for sending data is an RE that is in the PUSCH of the user equipment and that does not overlap with the RE occupied by the first RS.

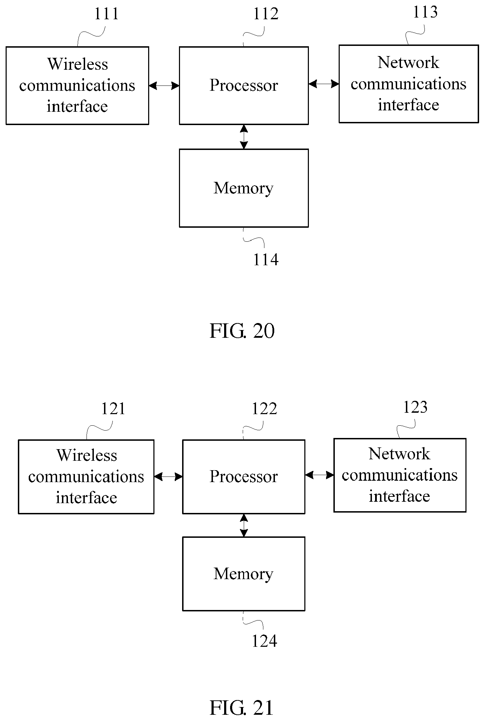

FIG. 20 is an optional schematic structural diagram of a network device according to an embodiment of the present invention.

As shown in FIG. 20, this embodiment of the present invention provides a network device, where the network device has a function of implementing behaviors of the first network device in the foregoing method in actuality. A structure of the network device includes a wireless communications interface 111, for example, a transmitter and a receiver, and a network communications interface 113. The wireless communications interface is configured to support communication between the network device and a network device and user equipment. The transmitter is configured to send the information or data in the foregoing method to the network device and the user equipment. The receiver is configured to support the network device in receiving the information or data sent by the network device and the user equipment in the foregoing method. The network communications interface is configured to support communication between the network devices. In a possible implementation, the structure of the network device may further include a demodulator and/or a decoder. The demodulator is configured to demodulate or despread and demodulate the information or data in the foregoing method. The decoder is configured to decode or descramble and decode the information or data in the foregoing method. In a possible implementation, the structure of the network device may further include a processor 112. The processor is configured as supporting the network device in performing a corresponding function in the foregoing method. It can be understood that, when the structure of the network device does not include the demodulator and/or the decoder, functions/a function of the demodulator and/or the decoder may also be implemented in the receiver or the processor. The network device may further include a memory 114, and the memory is configured to couple to the processor, and store a program instruction and data that are necessary for the network device. The network device may further include an interface unit, configured to support communication with another network device, for example, communication with a core network node.

The wireless communications interface may be configured to send a first reference signal to a network device or receive a first reference signal sent by another network device, and may also be configured to send third configuration information or fourth configuration information to user equipment.

It can be understood that FIG. 20 shows only a simplified design of the network device. In actual application, the network device may include any quantities of transmitters, receivers, processors, memories, and the like. All network devices that can implement the embodiments of the present invention fall within the protection scope of the embodiments of the present invention.

FIG. 21 is an optional schematic structural diagram of another network device according to an embodiment of the present invention.

As shown in FIG. 21, this embodiment of the present invention provides a network device, where the network device has a function of implementing behaviors of the second network device in the foregoing method in actuality. A structure of the network device includes a wireless communications interface 121, for example, a transmitter and a receiver, and a network communications interface 123. The wireless communications interface is configured to support communication between the network device and a network device and user equipment. The transmitter is configured to send the information or data in the foregoing method to the network device and the user equipment. The receiver is configured to support the network device in receiving the information or data sent by the network device and the user equipment in the foregoing method. The network communications interface is configured to support communication between the network devices. In a possible implementation, the structure of the network device may further include a demodulator and/or a decoder. The demodulator is configured to demodulate or despread and demodulate the information or data in the foregoing method. The decoder is configured to decode or descramble and decode the information or data in the foregoing method. In a possible implementation, the structure of the network device may further include a processor 122. The processor is configured as supporting the network device in performing a corresponding function in the foregoing method. It can be understood that, when the structure of the network device does not include the demodulator and/or the decoder, functions/a function of the demodulator and/or the decoder may also be implemented in the receiver or the processor. The network device may further include a memory 124, and the memory is configured to couple to the processor, and store a program instruction and data that are necessary for the network device. The network device may further include an interface unit, configured to support communication with another network device, for example, communication with a core network node.

The wireless communications interface may be configured to send a first reference signal to a network device or receive a first reference signal sent by another network device, and may also be configured to send third configuration information or fourth configuration information to user equipment.

It can be understood that FIG. 21 shows only a simplified design of the network device. In actual application, the network device may include any quantities of transmitters, receivers, processors, memories, and the like. All network devices that can implement the embodiments of the present invention fall within the protection scope of the embodiments of the present invention.

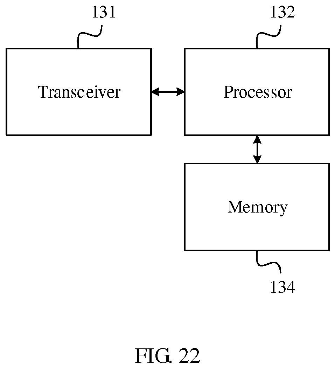

FIG. 22 is an optional schematic structural diagram of user equipment according to an embodiment of the present invention.

As shown in FIG. 22, this embodiment of the present invention provides user equipment. A structure of the user equipment includes a transceiver 131, for example, a receiver and a transmitter. The transmitter is configured to support the user equipment in sending the information or data in the foregoing method to a network device. The receiver is configured to support the user equipment in receiving the information or data sent by the network device in the foregoing method. In a possible implementation, the structure of the user equipment may further include an encoder and/or a modulator. The encoder is configured to encode or encode and scramble the information or data in the foregoing method. The modulator is configured to modulate or modulate and spread the information or data in the foregoing method. In a possible implementation, the structure of the user equipment may further include a processor 132. The processor is configured as supporting the user equipment in performing a corresponding function in the foregoing method. It can be understood that, when the structure of the user equipment does not include the modulator and/or the encoder, functions/a function of the modulator and/or the encoder may also be implemented in the transmitter or the processor. The user equipment may further include a memory 134, and the memory is configured to couple to the processor, and store a program instruction and data that are necessary for the user equipment.

A wireless communications interface may be configured to receive third configuration information or fourth configuration information sent by the network device.

It can be understood that FIG. 22 shows only a simplified design of the user equipment. In actual application, the user equipment may include any quantities of transmitters, receivers, processors, memories, and the like. All user equipment that can implement the embodiments of the present invention fall within the protection scope of the embodiments of the present invention.

An embodiment of the present invention provides a communications system. The system includes the network device and the user equipment in the foregoing aspects.

The foregoing embodiments may be implemented completely or partly by using software, hardware, firmware, or any combination thereof. When software is used to implement the embodiments, the embodiments may be implemented completely or partly in a form of a computer program product. The computer program product includes one or more computer instructions. When the computer program instruction is loaded and executed on a computer, all or some of the processes or functions according to the embodiments of the present invention are generated. The computer may be a general-purpose computer, a dedicated computer, a computer network, or another programmable apparatus. The computer instruction may be stored in a computer readable storage medium, or may be transmitted from a computer readable storage medium to another computer readable storage medium. For example, the computer instruction may be transmitted from a website, a computer, a server, or a data center to another website, another computer, another server, or another data center in a wired (for example, a coaxial cable, an optical fiber, or a digital subscriber line (DSL)) or wireless (for example, infrared, radio, or microwave) manner. The computer readable storage medium may be any usable medium that can be accessed by the computer, or may be a data storage device, such as a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

A person skilled in the art should understand that the embodiments of the present invention may be provided as a method, a system, or a computer program product. Therefore, the embodiments of the present invention may use a form of hardware-only embodiments, software-only embodiments, or embodiments with a combination of software and hardware. Moreover, the embodiments of the present invention may use a form of a computer program product that is implemented on one or more computer-usable storage media (including but not limited to a magnetic disk memory, a CD-ROM, an optical memory, and the like) that include computer-usable program code.

The embodiments of the present invention are described with reference to the flowcharts and/or block diagrams of the method, the apparatus (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specified function in one or more processes in the flowcharts and/or in one or more blocks in the block diagrams.

These computer program instructions may alternatively be stored in a computer readable memory that can instruct a computer or another programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

The invention is defined by the appended claims.

**Claims**

1. A reference signal, RS, transmission method, comprising:

   sending (S301), by a first network device, NE1, to which a first cell, CELL1, belongs, second configuration information, to a second network device, NE2, to which a second cell, CELL2, belongs, wherein the second configuration information includes subframe information of a first RS and second resource element, RE, indication information, wherein the second RE indication information includes a type indication identifier of a pilot pattern corresponding to each antenna port used by the NE1 to send the first RS, wherein the type indication identifier of the pilot pattern includes a reference signal type, a quantity of antenna ports, an antenna port number, and a pilot pattern index;
   determining (S302), by the NE2, a first configuration information based on the second configuration information, wherein the first configuration information comprises information used to indicate a time-frequency resource used by the NE1 for sending the first RS; and
   sending (S101), by the NE1, the first RS based on the first configuration information to the NE2.

2. The transmission method according to claim 1, wherein the first configuration information comprises:

   the subframe information of the first RS; and/or

first RE indication information, wherein the first RE indication information is used to indicate an RE occupied by the first RS.

3. The transmission method according to claim 2, wherein a subframe determined by the subframe information of the first RS belongs to a set of subframes selectable for a sounding reference signal, SRS, of the NE2.

4. The transmission method according to claim 3, wherein
the RE that is occupied by the first RS and that is indicated by the first RE indication information is different from an RE used for the SRS of the NE2; and/or the RE that is occupied by the first RS and that is indicated by the first RE indication information is different from a subcarrier on which an RE used for the SRS of the NE2 is located; and/or the RE that is occupied by the first RS and that is indicated by the first RE indication information is different from a symbol at which an RE used for the SRS of the NE2 is located.

5. The transmission method according to claim 2, wherein the subframe information of the first RS indicates a dedicated subframe, and the dedicated subframe carries the first RS.

6. The transmission method according to claim 2 or 5, wherein

a subframe determined by the subframe information of the first RS comprises only the first RS; or
a subframe determined by the subframe information of the first RS comprises the first RS and physical downlink control channel, PDCCH, information, or comprises the first RS and cell-specific reference signal, CRS, information, or comprises the first RS, PDCCH information, and CRS information.

7. The transmission method according to any one of claims 1 to 6, wherein the method further comprises:
determining, by the NE1 based on the first configuration information, a time-frequency resource that is available for sending downlink data to first user equipment, UE1, served by the first cell.

8. The transmission method according to any one of claims 1 to 7, wherein
sending, by the NE1, third configuration information to the UE1, wherein the third configuration information is used to indicate a time-frequency resource that is available to the UE1 for receiving data from the NE1, and the time-frequency resource that is available to the UE1 for receiving downlink data from the NE1 does not overlap with the time-frequency resource that is indicated by the first configuration information and that is used by the NE1 for sending the first RS.

9. A readable storage medium, comprising an instruction, wherein when the instruction is executed, the reference signal transmission method according to any one of claims 1 to 8 is implemented.

10. A transmission system, comprising a first network device, NE1, and a second network device, NE2, wherein the NE1 and the NE2 comprise means for performing the method according to any one of claims 1 to 8.


**Patentansprüche**

1. Verfahren zur Übertragung von Referenzsignalen, RS, umfassend:

Senden (S301) von zweiten Konfigurationsinformationen durch eine erste Netzwerkvorrichtung, NE1, zu der eine erste Zelle, CELL1, gehört, an eine zweite Netzwerkvorrichtung, NE2, zu der eine zweite Zelle, CELL2, gehört, wobei die zweiten Konfigurationsinformationen Teilrahmeninformationen eines ersten RS und Angabeinformationen eines zweiten Ressourcenelements, RE, beinhalten, wobei die Angabeinformationen des zweiten RE eine Typangabekennung eines Pilotmusters beinhalten, das jedem Antennenanschluss entspricht, der durch die NE1 zum Senden des ersten RS verwendet wird, wobei die Typangabekennung des Pilotmusters einen Referenzsignaltyp, eine Anzahl von Antennenanschlüssen, eine Antennenanschlussnummer und einen Pilotmusterindex beinhaltet;
Bestimmen (S302) von ersten Konfigurationsinformationen durch die NE2 basierend auf den zweiten Konfigurationsinformationen, wobei die ersten Konfigurationsinformationen Informationen umfassen, die verwendet werden, um eine Zeit-Frequenz-Ressource anzugeben, welche durch die NE1 zum Senden des ersten RS verwendet wird; und
Senden (S101) des ersten RS basierend auf den ersten Konfigurationsinformationen durch die NE1 an die NE2.

**2.** Verfahren zur Übertragung nach Anspruch 1, wobei die ersten Konfigurationsinformationen Folgendes umfassen:

die Teilrahmeninformationen des ersten RS; und/oder
erste RE-Angabeinformationen, wobei die ersten RE-Angabeinformationen verwendet werden, um anzugeben, dass ein RE durch das erste RS belegt ist.

**3.** Verfahren zur Übertragung nach Anspruch 2, wobei ein Teilrahmen, der durch die Teilrahmeninformationen des ersten RS bestimmt wird, zu einem Satz von Teilrahmen gehört, die für ein Resonanzreferenzsignal, SRS, der NE2 auswählbar sind.

**4.** Verfahren zur Übertragung nach Anspruch 3, wobei
sich das RE, das durch das erste RS belegt ist und das durch die ersten RE-Angabeinformationen angegeben wird, von einem RE unterscheidet, das für das SRS der NE2 verwendet wird; und/oder sich das RE, das durch das erste RS belegt ist und das durch die ersten RE-Angabeinformationen angegeben wird, von einem Hilfsträger unterscheidet, auf dem sich ein für das SRS der NE2 verwendetes RE befindet; und/oder sich das RE, das durch das erste RS belegt ist und das durch die ersten RE-Angabeinformationen angegeben wird, von einem Symbol unterscheidet, an dem sich ein für das SRS der NE2 verwendetes RE befindet.

**5.** Verfahren zur Übertragung nach Anspruch 2, wobei die Teilrahmeninformationen des ersten RS einen dedizierten Teilrahmen angeben und der dedizierte Teilrahmen das erste RS trägt.

**6.** Verfahren zur Übertragung nach Anspruch 2 oder 5, wobei

ein Teilrahmen, der durch die Teilrahmeninformationen des ersten RS bestimmt wird, nur das erste RS umfasst; oder
ein Teilrahmen, der durch die Teilrahmeninformationen des ersten RS bestimmt wird, das erste RS und Informationen eines physischen Downlink-Steuerkanals, PDCCH, umfasst oder das erste RS und Informationen eines zellenspezifischen Referenzsignals, CRS, umfasst oder das erste RS, PDCCH-Informationen und CRS-Informationen umfasst.

**7.** Verfahren zur Übertragung nach einem der Ansprüche 1 bis 6, wobei das Verfahren ferner Folgendes umfasst:
Bestimmen einer Zeit-Frequenz-Ressource, die zum Senden von Downlink-Daten an ein durch die erste Zelle bedientes erstes Benutzergerät, UE1, verfügbar ist, durch die NE1 basierend auf den ersten Konfigurationsinformationen.

**8.** Verfahren zur Übertragung nach einem der Ansprüche 1 bis 7, wobei
das Senden von dritten Konfigurationsinformationen durch die NE1 an das UE1, wobei die dritten Konfigurationsinformationen verwendet werden, um eine Zeit-Frequenz-Ressource, die für das UE1 zum Empfangen von Daten von der NE1 verfügbar ist, und die Zeit-Frequenz-Ressource anzugeben, die für das UE1 zum Empfangen von Downlink-Daten von der NE1 verfügbar ist, sich nicht mit der Zeit-Frequenz-Ressource überlappt, die durch die ersten Konfigurationsinformationen angegeben wird und die durch die NE1 zum Senden des ersten RS verwendet wird.

**9.** Lesbares Speichermedium, das eine Anweisung umfasst, wobei bei der Ausführung der Anweisung das Verfahren zur Übertragung von Referenzsignalen nach einem der Ansprüche 1 bis 8 umgesetzt wird.

**10.** System zur Übertragung, umfassend eine erste Netzwerkvorrichtung, NE1, und eine zweite Netzwerkvorrichtung, NE2, wobei die NE1 und die NE2 Mittel zum Durchführen des Verfahrens nach einem der Ansprüche 1 bis 8 umfassen.

**Revendications**

**1.** Procédé de transmission de signal de référence, RS, comprenant :

l'envoi (S301), par un premier dispositif réseau, NE1, auquel appartient une première cellule, CELL1, de secondes informations de configuration, à un second dispositif réseau, NE2, auquel appartient une seconde cellule, CELL2, dans lequel les secondes informations de configuration comportent des informations de sous-trame d'un premier RS et des informations d'indication d'un second élément de ressource, RE, dans lequel les secondes informations d'indication de RE comportent un identifiant d'indication de type d'un modèle pilote correspondant à chaque port d'antenne utilisé par le NE1 pour envoyer le premier RS, dans lequel l'identifiant d'indication de type du motif pilote comporte un type de signal de référence, une quantité de ports d'antenne, un numéro de port d'antenne et un indice de motif pilote ;

la détermination (S302), par le NE2, d'une première information de configuration sur la base des deuxièmes informations de configuration, dans lequel les premières informations de configuration comprennent des informations utilisées pour indiquer une ressource temps-fréquence utilisée par le NE1 pour envoyer le premier RS ; et l'envoi (S101), par le NE1, du premier RS sur la base des premières informations de configuration au NE2.

2. Procédé de transmission selon la revendication 1, dans lequel les premières informations de configuration comprennent :

les informations de sous-trame du premier RS ; et/ou
des premières informations d'indication de RE, dans lesquelles les premières informations d'indication de RE sont utilisées pour indiquer un RE occupé par le premier RS.

3. Procédé de transmission selon la revendication 2, dans lequel une sous-trame déterminée par les informations de sous-trame du premier RS appartient à un ensemble de sous-trames pouvant être sélectionnées pour un signal de référence de sondage, SRS, du NE2.

4. Procédé de transmission selon la revendication 3, dans lequel
le RE qui est occupé par le premier RS et qui est indiqué par les premières informations d'indication de RE est différent d'un RE utilisé pour le SRS du NE2 ; et/ou le RE qui est occupé par le premier RS et qui est indiqué par les premières informations d'indication de RE est différent d'une sous-porteuse sur laquelle se trouve un RE utilisé pour le SRS du NE2 ; et/ou le RE qui est occupé par le premier RS et qui est indiqué par les premières informations d'indication de RE est différent d'un symbole auquel se trouve un RE utilisé pour le SRS du NE2.

5. Procédé de transmission selon la revendication 2, dans lequel les informations de sous-trame du premier RS indiquent une sous-trame dédiée, et la sous-trame dédiée transporte le premier RS.

6. Procédé de transmission selon la revendication 2 ou 5, dans lequel

une sous-trame déterminée par les informations de sous-trame du premier RS comprend uniquement le premier RS ; ou
une sous-trame déterminée par les informations de sous-trame du premier RS comprend le premier RS et les informations de canal de commande de liaison descendante physique, PDCCH, ou comprend le premier RS et les informations de signal de référence spécifique à la cellule, CRS, ou comprend le premier RS, les informations PDCCH, et les informations CRS.

7. Procédé de transmission selon l'une quelconque des revendications 1 à 6, dans lequel le procédé comprend en outre :
la détermination, par le NE1 sur la base des premières informations de configuration, d'une ressource temps-fréquence qui est disponible pour envoyer des données de liaison descendante au premier équipement d'utilisateur, UE1, desservi par la première cellule.

8. Procédé de transmission selon l'une quelconque des revendications 1 à 7, dans lequel l'envoi, par le NE1, de troisièmes informations de configuration à l'UE1, dans lequel les troisièmes informations de configuration sont utilisées pour indiquer une ressource temps-fréquence qui est disponible pour l'UE1 pour recevoir des données du NE1, et la ressource temps-fréquence qui est disponible pour l'UE1 pour recevoir des données de liaison descendante du NE1 ne chevauche pas la ressource temps-fréquence qui est indiquée par les premières informations de configuration et qui est utilisée par le NE1 pour envoyer le premier RS.

9. Support de stockage lisible, comprenant une instruction, dans lequel lorsque l'instruction est exécutée, le procédé de transmission de signal de référence selon l'une quelconque des revendications 1 à 8 est mis en œuvre.

10. Système de transmission, comprenant un premier dispositif réseau, NE1, et un second dispositif réseau, NE2, dans lequel le NE1 et le NE2 comprennent des moyens pour mettre en œuvre le procédé selon l'une quelconque des revendications 1 à 8.

NE1

NE2

S101:
Send a first reference signal RS based on
first configuration information

S102:
Cancel, based on the
first RS, interference
from an NE1 to first
uplink data

FIG. 1

NE1

NE2

S101:
Send a first reference signal RS based on
first configuration information

S201:
Restore a first channel
between an NE1 and an
NE2 based on the first RS

S204:
Send first downlink data and/or a
scheduling result of first downlink data

S202:
Obtain a first interference
signal based on the first
channel, and the first
downlink data and/or the
scheduling result of the first
downlink data

S203:
Demodulate first uplink
data based on the first
interference signal

FIG. 2

| NE1 | NE2 |
|---|---|

S301:
Send second configuration information

S302:
Determine first
configuration information
based on the second
configuration information

S101:
Send a first reference signal RS based on the
first configuration information

S102:
Cancel, based on the first
RS, interference from an
NE1 to first uplink data

FIG. 3

| NE1 | UE1 |
|---|---|

S410:
Send third configuration information

S401:
Determine, based on
the third configuration
information, a time-
frequency resource that
is available for
receiving data

FIG. 4

NE1

UE1

S501: Determine, based on first configuration information, a time-frequency resource that is available for sending downlink data to first user equipment UE1

Send the downlink data

**FIG. 5**

NE2

UE2

S610:
Send fourth configuration information

S601:
Determine, based on the fourth configuration information, a time-frequency resource that is available for sending data

**FIG. 6**

| NE2 | | UE2 |
|---|---|---|

S701:
Determine, based on first
configuration information,
a time-frequency resource
that is available to UE2 for
sending uplink data

Send the uplink data

FIG. 7

FIG. 8

FIG. 9

FIG. 10

FIG. 11

FIG. 12

FIG. 13

FIG. 14

FIG. 15

FIG. 16

11

First transceiver module ↔ 12 Processing module ↔ 13 Second transceiver module

FIG. 17

21

First transceiver module ↔ 22 Processing module ↔ 23 Second transceiver module

FIG. 18

31

Transceiver module ↔ 32 Processing module

FIG. 19

111         112         113

| Wireless communications interface | ↔ | Processor | ↔ | Network communications interface |

↕

| Memory |

114

FIG. 20

121         122         123

| Wireless communications interface | ↔ | Processor | ↔ | Network communications interface |

↕

| Memory |

124

FIG. 21

131        132

| Transceiver | ↔ | Processor |

Memory

134

FIG. 22

**EP 3 457 612 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015350945 A1

- WO 2015034402 A1